(19) Europäisches Patentamt
European Patent Office
Office européen des brevets

(11) **EP 4 057 763 A1**

(12) **EUROPEAN PATENT APPLICATION**
published in accordance with Art. 153(4) EPC

(43) Date of publication:
**14.09.2022 Bulletin 2022/37**

(21) Application number: **20885310.1**

(22) Date of filing: **06.11.2020**

(51) International Patent Classification (IPC):
**H04W 74/08** (2009.01)    **H04W 74/00** (2009.01)
**H04W 72/12** (2009.01)

(52) Cooperative Patent Classification (CPC):
**H04W 72/1268; H04W 72/1289; H04W 72/14;**
**H04W 74/0808**

(86) International application number:
**PCT/KR2020/015503**

(87) International publication number:
**WO 2021/091300 (14.05.2021 Gazette 2021/19)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **07.11.2019 KR 20190141809**
**15.11.2019 KR 20190147037**

(71) Applicant: **LG Electronics Inc.**
**Yeongdeungpo-Gu**
**Seoul 07336 (KR)**

(72) Inventors:
• **MYUNG, Sechang**
**Seoul 06772 (KR)**
• **KIM, Seonwook**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD FOR TRANSMITTING AND RECEIVING UPLINK CHANNEL IN WIRELESS COMMUNICATION SYSTEM, AND DEVICE FOR SAME**

(57)    Disclosed is a method for a terminal to transmit a Physical Uplink Shared Channel (PUSCH) in a wireless communication system. In particular, the disclosed method is characterized by comprising the steps of: receiving an uplink (UL) grant for scheduling a Dynamic Grant (DG)-PUSCH; transmitting a Configured Grant (CG)-PUSCH; and transmitting the DG-PUSCH on the basis of the UL grant, wherein the DG-PUSCH is transmitted without gaps after the transmission of the CG-PUSCH on the basis of first frequency resources for the DG-PUSCH being the same as second frequency resources for the CG-PUSCH, or the first frequency resources being a subset of the second frequency resources.

FIG. 14

**Description**

**TECHNICAL FIELD**

The present disclosure relates to a method of transmitting and receiving an uplink channel in a wireless communication system and an apparatus therefor. More specifically, the present disclosure relates to a method of transmitting and receiving a configured granted (CG)-physical uplink shared channel (PUSCH) and a dynamic granted (DG)-PUSCH and an apparatus therefor.

**BACKGROUND ART**

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**Technical Problem**

The present disclosure is to provide a method of transmitting and receiving an uplink channel in a wireless communication system and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solution**

According to an aspect of the present disclosure, provided herein is a method of transmitting a physical uplink shared channel (PUSCH) by a user equipment (UE) in a wireless communication system, including receiving an uplink grant for scheduling a dynamic grant (DG)-PUSCH, transmitting a configured grant (CG)-PUSCH, and transmitting the DG-PUSCH based on the UL grant. The DG-PUSCH may be transmitted without a gap after the CG-PUSCH is transmitted, based on first frequency resources for the DG-PUSCH being equal to second frequency resources for the CG-PUSCH or the first frequency resources being a subset of the second frequency resources.

The transmitting the CG-PUSCH may include performing a listen-before-talk (LBT) operation for transmitting the CG-PUSCH, and transmitting the CG-PUSCH based on a result of performing the LBT operation. The transmitting the DG-PUSCH may include transmitting the DG-PUSCH without performing the LBT operation.

A starting symbol of the DG-PUSCH and an ending symbol of the CG-PUSCH may be continuous on a time axis.

At least one last symbol among symbols of the CG-PUSCH prior to the DG-PUSCH may be dropped, based on first frequency resources being not equal to the second frequency resources and the first frequency resources being not a subset of the second frequency resources.

The transmission of the DG-PUSCH may be scheduled after the transmission of the CG-PUSCH.

In another aspect of the present disclosure, provided herein is an apparatus for transmitting a physical uplink shared channel (PUSCH) in a wireless communication system, including at least one processor; and at least one memory operably connected to the at least one processor and configured to store instructions causing, when executed, the at least one processor to perform an operation. The operation may include receiving an uplink grant for scheduling a dynamic grant (DG)-PUSCH, transmitting a configured grant (CG)-PUSCH, and transmitting the DG-PUSCH based on the UL grant. The DG-PUSCH may be transmitted without a gap after the CG-PUSCH is transmitted, based on first frequency resources for the DG-PUSCH being equal to second frequency resources for the CG-PUSCH or the first frequency resources being a subset of the second frequency resources.

The transmitting the CG-PUSCH may include performing a listen-before-talk (LBT) operation for transmitting the CG-PUSCH, and transmitting the CG-PUSCH based on a result of performing the LBT operation. The transmitting the DG-PUSCH may include transmitting the DG-PUSCH without performing the LBT operation.

A starting symbol of the DG-PUSCH and an ending symbol of the CG-PUSCH may be continuous on a time axis.

At least one last symbol among symbols of the CG-PUSCH prior to the DG-PUSCH may be dropped, based on first frequency resources being not equal to the second frequency resources and the first frequency resources being not a subset of the second frequency resources

The transmission of the DG-PUSCH may be scheduled after the transmission of the CG-PUSCH.

In another aspect of the present disclosure, provided herein is a computer-readable storage medium including at least one computer program causing at least one processor to perform an operation. The operation may include receiving an uplink grant for scheduling a dynamic grant (DG)-PUSCH, transmitting a configured grant (CG)-PUSCH, and transmitting the DG-PUSCH based on the UL grant. The DG-PUSCH may be transmitted without a gap after the CG-PUSCH is transmitted, based on first frequency resources for the DG-PUSCH being equal to second frequency resources for the CG-PUSCH or the first frequency resources being a subset of the second frequency resources.

In another aspect of the present disclosure, provided herein is a user equipment (UE) for transmitting a physical uplink shared channel (PUSCH) in a wireless communication system, including at least one transceiver; at least one processor; and at least one memory operably connected to the at least one processor and configured to store instructions causing, when executed, the at least one processor to perform an operation. The operation may include receiving an uplink grant for scheduling a dynamic grant (DG)-PUSCH through the at least one transceiver, transmitting a configured grant (CG)-PUSCH through the at least one transceiver, and transmitting the DG-PUSCH based on the UL grant through the at least one transceiver. The DG-PUSCH may be transmitted without a gap after the CG-PUSCH is transmitted, based on first frequency resources for the DG-PUSCH being equal to second frequency resources for the CG-PUSCH or the first frequency resources being a subset of the second frequency resources.

In another aspect of the present disclosure, provided herein is a method of receiving a physical uplink shared channel (PUSCH) by a base station (BS) in a wireless communication system, including transmitting an uplink grant for scheduling a dynamic grant (DG)-PUSCH, receiving a configured grant (CG)-PUSCH, and receiving the DG-PUSCH based on the UL grant. The DG-PUSCH may be received without a gap after the CG-PUSCH is transmitted, based on first frequency resources for the DG-PUSCH being equal to second frequency resources for the CG-PUSCH or the first frequency resources being a subset of the second frequency resources.

In another aspect of the present disclosure, provided herein is a base station (BS) for receiving a physical uplink shared channel (PUSCH) in a wireless communication system, including at least one transceiver; at least one processor; and at least one memory operably connected to the at least one processor and configured to store instructions causing, when executed, the at least one processor to perform an operation. The operation may include transmitting an uplink grant for scheduling a dynamic grant (DG)-PUSCH through the at least one transceiver, receiving a configured grant (CG)-PUSCH through the at least one transceiver, and receiving the DG-PUSCH based on the UL grant through the at least one transceiver. The DG-PUSCH may be received without a gap after the CG-PUSCH is transmitted, based on first frequency resources for the DG-PUSCH being equal to second frequency resources for the CG-PUSCH or the first frequency resources being a subset of the second frequency resources.

**Advantageous Effects**

According to the present disclosure, when a dynamic granted (DG)-physical uplink shared channel (PUSCH) is scheduled while a configured granted (CG)-PUSCH (Physical Uplink Shared Channel) is transmitted, the CG-PUSCH and the DG-PUSCH may be transmitted and transmitted by efficiently performing listen-before-talk (LBT).

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**Brief Description of the Drawings**

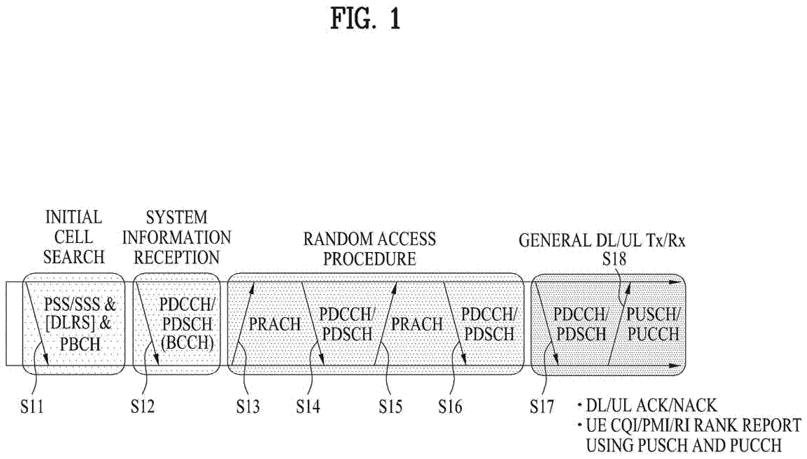

FIG. 1 illustrates physical channels and a general signal transmission method using the physical channels in a 3rd generation partnership project (3GPP) system as an exemplary wireless communication system;
FIG. 2 illustrates a radio frame structure;
FIG. 3 illustrates a resource grid during the duration of a slot;
FIG. 4 illustrates exemplary mapping of physical channels in a slot;
FIG. 5 illustrates exemplary uplink (UL) transmission operations of a user equipment (UE);
FIG. 6 illustrates exemplary repeated transmissions based on a configured grant;
FIG. 7 illustrates a wireless communication system supporting an unlicensed band;
FIG. 8 illustrates an exemplary method of occupying resources in an unlicensed band;
FIG. 9 illustrates an exemplary channel access procedure of a UE for UL signal transmission and/or DL signal transmission in an unlicensed band applicable to the present disclosure;
FIGS. 10 to 15 are diagrams illustrating UL channel transmission and reception methods according to an embodiment of the present disclosure;

FIG. 16 illustrates an exemplary communication system applied to the present disclosure;

FIG. 17 illustrates an exemplary wireless device applicable to the present disclosure;

FIG. 18 illustrates another exemplary wireless device applicable to the present disclosure; and

FIG. 19 illustrates an exemplary vehicle or autonomous driving vehicle applicable to the present disclosure.

**BEST MODE**

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3$^{rd}$ generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

As more and more communication devices require larger communication capacities, the need for enhanced mobile broadband communication relative to the legacy radio access technologies (RATs) has emerged. Massive machine type communication (MTC) providing various services to inter-connected multiple devices and things at any time in any place is one of significant issues to be addressed for next-generation communication. A communication system design in which services sensitive to reliability and latency are considered is under discussion as well. As such, the introduction of the next-generation radio access technology (RAT) for enhanced mobile broadband communication (eMBB), massive MTC (mMTC), and ultra-reliable and low latency communication (URLLC) is being discussed. For convenience, this technology is called NR or New RAT in the present disclosure.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

In a wireless access system, a user equipment (UE) receives information from a base station (BS) on DL and transmits information to the BS on UL. The information transmitted and received between the UE and the BS includes general data and various types of control information. There are many physical channels according to the types/usages of information transmitted and received between the BS and the UE.

IG. 1 illustrates physical channels and a general signal transmission method using the physical channels in a 3GPP system.

When a UE is powered on or enters a new cell, the UE performs initial cell search (S11). The initial cell search involves acquisition of synchronization to aBS. For this purpose, the UE receives a synchronization signal block (SSB) from the BS. The SSB includes a primary synchronization signal (PSS), a secondary synchronization signal (SSS), and a physical broadcast channel (PBCH). The UE synchronizes its timing to the BS and acquires information such as a cell identifier (ID) based on the PSS/SSS. Further, the UE may acquire information broadcast in the cell by receiving the PBCH from the BS. During the initial cell search, the UE may also monitor a DL channel state by receiving a downlink reference signal (DL RS).

After the initial cell search, the UE may acquire more detailed system information by receiving a physical downlink control channel (PDCCH) and a physical downlink shared channel (PDSCH) corresponding to the PDCCH (S12).

Subsequently, to complete connection to the BS, the UE may perform a random access procedure with the BS (S13 to S16). Specifically, the UE may transmit a preamble on a physical random access channel (PRACH) (S13) and may receive a PDCCH and a random access response (RAR) for the preamble on a PDSCH corresponding to the PDCCH (S14). The UE may then transmit a physical uplink shared channel (PUSCH) by using scheduling information in the RAR (S15), and perform a contention resolution procedure including reception of a PDCCH and a PDSCH signal corresponding to the PDCCH (S16).

When the random access procedure is performed in two steps, steps S13 and S15 may be performed as one step (in which Message A is transmitted by the UE), and steps S14 and S16 may be performed as one step (in which Message B is transmitted by the BS).

After the above procedure, the UE may receive a PDCCH and/or a PDSCH from the BS (S17) and transmit a physical uplink shared channel (PUSCH) and/or a physical uplink control channel (PUCCH) to the BS (S18), in a general UL/DL signal transmission procedure. Control information that the UE transmits to the BS is generically called uplink control information (UCI). The UCI includes a hybrid automatic repeat and request acknowledgement/negative acknowledgement (HARQ-ACK/NACK), a scheduling request (SR), channel state information (CSI), and so on. The CSI includes a channel quality indicator (CQI), a precoding matrix index (PMI), a rank indication (RI), and so on. In general, UCI is transmitted on a PUCCH. However, if control information and data should be transmitted simultaneously, the control information and the data may be transmitted on a PUSCH. In addition, the UE may transmit the UCI aperiodically on the PUSCH, upon receipt of a request/command from a network.

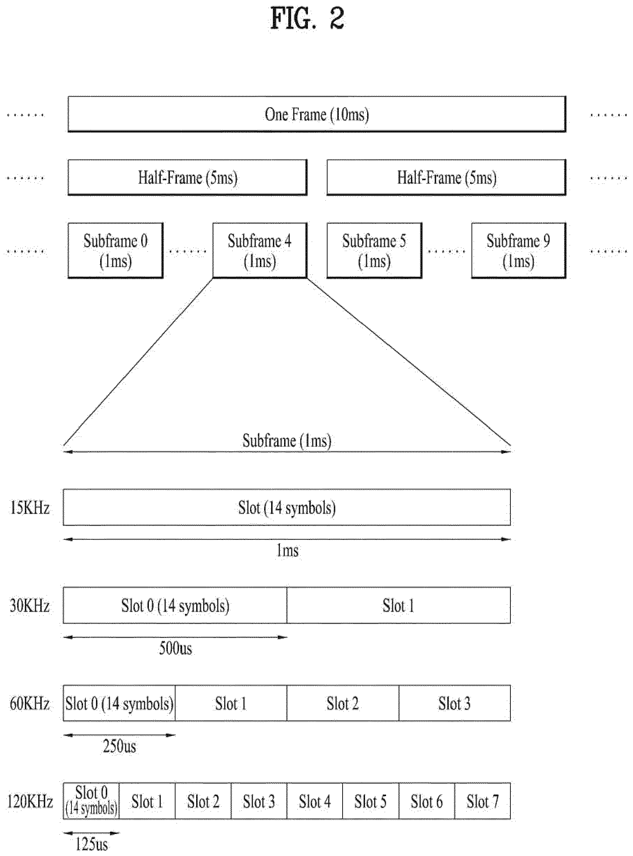

FIG. 2 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS $(15*2^u)$ | $N^{slot}_{symb}$ | $N^{frame,u}_{slot}$ | $N^{subframe,u}_{slot}$ |
|---|---|---|---|
| 15 KHz (u=0) | 14 | 10 | 1 |
| 30 KHz (u=1) | 14 | 20 | 2 |
| 60 KHz (u=2) | 14 | 40 | 4 |
| 120 KHz (u=3) | 14 | 80 | 8 |
| 240 KHz (u=4) | 14 | 160 | 16 |
| * $N^{slot}_{symb}$: number of symbols in a slot * $N^{rame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS $(15*2^u)$ | $N^{slot}_{symb}$ | $N^{frame,u}_{slot}$ | $N^{subframe,u}_{slot}$ |
|---|---|---|---|
| 60 KHz (u=2) | 12 | 40 | 4 |

The frame structure is merely an example, and the number of subframes, the number of slots, and the number of symbols in a frame may be changed in various manners. In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450 MHz - 7125 MHz | 15, 30, 60 kHz |
| FR2 | 24250 MHz - 52600 MHz | 60, 120, 240 kHz |

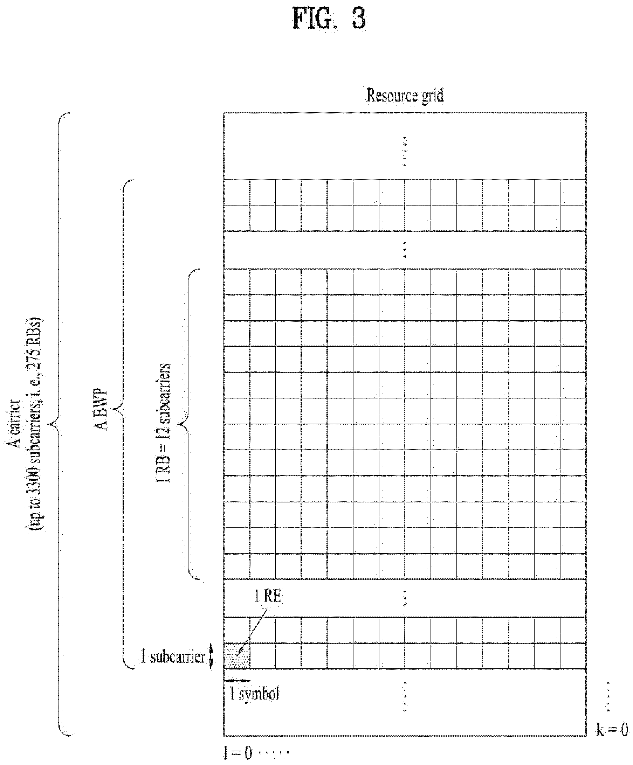

FIG. 3 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

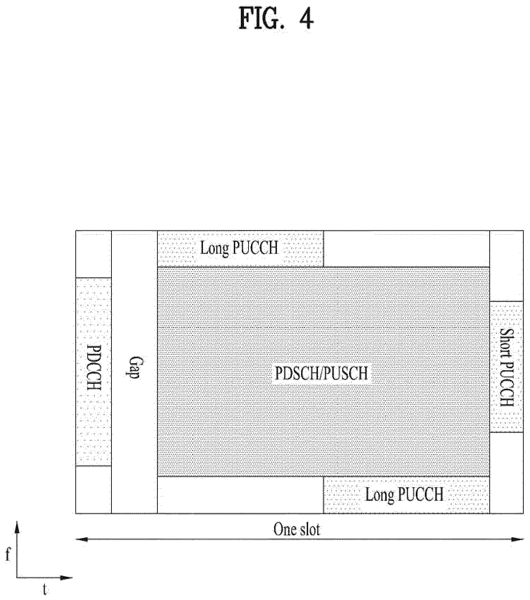

FIG. 4 illustrates exemplary mapping of physical channels in a slot.

A DL control channel, DL or UL data, and a UL control channel may all be included in one slot. For example, the first N symbols (hereinafter, referred to as a DL control region) in a slot may be used to transmit a DL control channel, and the last M symbols (hereinafter, referred to as a UL control region) in the slot may be used to transmit a UL control channel. N and M are integers equal to or greater than 0. A resource region (hereinafter, referred to as a data region) between the DL control region and the UL control region may be used for DL data transmission or UL data transmission. A time gap for DL-to-UL or UL-to-DL switching may be defined between a control region and the data region. A PDCCH may be transmitted in the DL control region, and a PDSCH may be transmitted in the DL data region. Some symbols at the time of switching from DL to UL in a slot may be configured as the time gap.

Now, a detailed description will be given of physical channels.

The PDSCH delivers DL data (e.g., a downlink shared channel (DL-SCH) transport block (TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

The PDCCH is transmitted in a control resource set (CORESET). The CORESET corresponds to a set of physical resources/parameters used to deliver the PDCCH/DCI in a BWP. For example, the CORESET is defined as a set of REGs with a given numerology (e.g., an SCS, a CP length, or the like). The CORESET may be configured by system information (e.g., a master information block (MIB)) or UE-specific higher-layer signaling (e.g., RRC signaling). For example, the following parameters/information may be used to configure a CORESET, and a plurality of CORESETs may overlap with each other in the time/frequency domain.

- controlResourceSetId: indicates the ID of a CORESET.
- frequencyDomainResources: indicates the frequency area resources of the CORESET. The frequency area resources are indicated by a bitmap, and each bit of the bitmap corresponds to an RB group (i.e., six consecutive RBs). For example, the most significant bit (MSB) of the bitmap corresponds to the first RB group of a BWP. An RB group corresponding to a bit set to 1 is allocated as frequency area resources of the CORESET.
- duration: indicates the time area resources of the CORESET. It indicates the number of consecutive OFDMA symbols in the CORESET. For example, the duration is set to one of 1 to 3.
- cce-REG-MappingType: indicates a CCE-to-REG mapping type. An interleaved type and a non-interleaved type are supported.
- precoderGranularity: indicates a precoder granularity in the frequency domain.
- tci-StatesPDCCH: provides information indicating a transmission configuration indication (TCI) state for the PDCCH (e.g., TCI-StateID). The TCI state is used to provide the quasi-co-location relation between DL RS(s) in an RS set (TCI-state) and PDCCH DMRS ports.
- tci-PresentInDCI: indicates whether a TCI field is included in DCI.

- pdcch-DMRS-ScramblingID: provides information used for initialization of a PDCCH DMRS scrambling sequence.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

[Table 4]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.

- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.

Table 5 illustrates exemplary DCI formats transmitted on the PDCCH.

[Table 5]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |

(continued)

| DCI format | Usage |
|---|---|
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PUCCH delivers uplink control information (UCI). The UCI includes the following information.

- SR: information used to request UL-SCH resources.
- HARQ-ACK: a response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI: feedback information for a DL channel. Multiple input multiple output (MIMO)-related feedback information includes an RI and a PMI.

Table 6 illustrates exemplary PUCCH formats. PUCCH formats may be divided into short PUCCHs (Formats 0 and 2) and long PUCCHs (Formats 1, 3, and 4) based on PUCCH transmission durations.

[Table 6]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT -s-OFDM (no UE multiplexing) |
| 4 | 4-14 | >2 | HARQ, CSI, [SR] | DFT -s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (LI) signaling such as a PDCCH) (configured scheduling or configured grant). The PUSCH transmission may be performed in a codebook-based or non-codebook-based manner.

On DL, the BS may dynamically allocate resources for DL transmission to the UE by PDCCH(s) (including DCI format 1_0 or DCI format 1_1). Further, the BS may indicate to a specific UE that some of resources pre-scheduled for the UE have been pre-empted for signal transmission to another UE, by PDCCH(s) (including DCI format 2_1). Further, the BS may configure a DL assignment periodicity by higher-layer signaling and signal activation/deactivation of a configured DL assignment by a PDCCH in a semi-persistent scheduling (SPS) scheme, to provide a DL assignment for an initial HARQ transmission to the UE. When a retransmission for the initial HARQ transmission is required, the BS explicitly schedules retransmission resources through a PDCCH. When a DCI-based DL assignment collides with an SPS-based DL assignment, the UE may give priority to the DCI-based DL assignment.

Similarly to DL, for UL, the BS may dynamically allocate resources for UL transmission to the UE by PDCCH(s) (including DCI format 0_0 or DCI format 0_1). Further, the BS may allocate UL resources for initial HARQ transmission to the UE based on a configured grant (CG) method (similarly to SPS). Although dynamic scheduling involves a PDCCH for a PUSCH transmission, a configured grant does not involve a PDCCH for a PUSCH transmission. However, UL resources for retransmission are explicitly allocated by PDCCH(s). As such, an operation of preconfiguring UL resources without a dynamic grant (DG) (e.g., a UL grant through scheduling DCI) by the BS is referred to as a "CG". Two types are defined for the CG.

- Type 1: a UL grant with a predetermined periodicity is provided by higher-layer signaling (without L1 signaling).
- Type 2: the periodicity of a UL grant is configured by higher-layer signaling, and activation/deactivation of the CG is signaled by a PDCCH, to provide the UL grant.

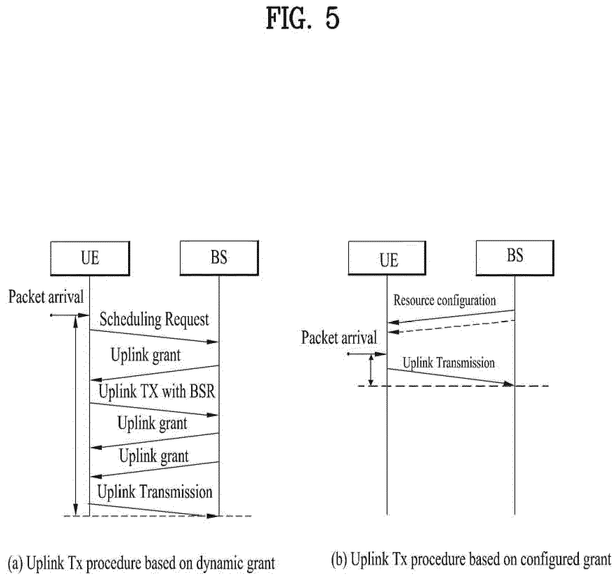

FIG. 5 illustrates exemplary UL transmission operations of a UE. The UE may transmit an intended packet based on a DG (FIG. 5(a)) or based on a CG (FIG. 5(b)).

Resources for CGs may be shared between a plurality of UEs. A UL signal transmission based on a CG from each UE may be identified by time/frequency resources and an RS parameter (e.g., a different cyclic shift or the like). Therefore, when a UE fails in transmitting a UL signal due to signal collision, the BS may identify the UE and explicitly transmit a retransmission grant for a corresponding TB to the UE.

K repeated transmissions including an initial transmission are supported for the same TB by a CG. The same HARQ process ID is determined for K times repeated UL signals based on resources for the initial transmission. The redundancy versions (RVs) of a K times repeated TB have one of the patterns {0, 2, 3, 1}, {0, 3, 0, 3}, and {0, 0, 0, 0}.

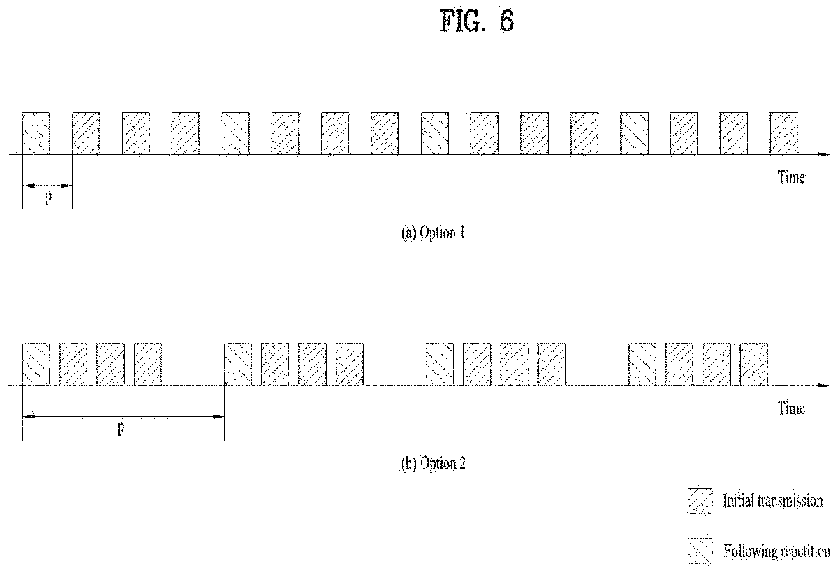

FIG. 6 illustrates exemplary repeated transmissions based on a CG.

The UE performs repeated transmissions until one of the following conditions is satisfied:

- A UL grant for the same TB is successfully received;
- The repetition number of the TB reaches K; and

- (In Option 2) the ending time of a period P is reached.

Similarly to licensed-assisted access (LAA) in the legacy 3GPP LTE system, use of an unlicensed band for cellular communication is also under consideration in a 3GPP NR system. Unlike LAA, a stand-along (SA) operation is aimed in an NR cell of an unlicensed band (hereinafter, referred to as NR unlicensed cell (UCell)). For example, PUCCH, PUSCH, and PRACH transmissions may be supported in the NR UCell.

In an NR system to which various embodiments of the present disclosure are applicable, up to 400 MHz per component carrier (CC) may be allocated/supported. When a UE operating in such a wideband CC always operates with a radio frequency (RF) module turned on for the entire CC, battery consumption of the UE may increase.

Alternatively, considering various use cases (e.g., eMBB, URLLC, mMTC, and so on) operating within a single wideband CC, a different numerology (e.g., SCS) may be supported for each frequency band within the CC.

Alternatively, each UE may have a different maximum bandwidth capability.

In this regard, the BS may indicate to the UE to operate only in a partial bandwidth instead of the total bandwidth of the wideband CC. The partial bandwidth may be defined as a bandwidth part (BWP).

A BWP may be a subset of contiguous RBs on the frequency axis. One BWP may correspond to one numerology (e.g., SCS, CP length, slot/mini-slot duration, and so on).

The BS may configure multiple BWPs in one CC configured for the UE. For example, the BS may configure a BWP occupying a relatively small frequency area in a PDCCH monitoring slot, and schedule a PDSCH indicated (or scheduled) by a PDCCH in a larger BWP. Alternatively, when UEs are concentrated on a specific BWP, the BS may configure another BWP for some of the UEs, for load balancing. Alternatively, the BS may exclude some spectrum of the total bandwidth and configure both-side BWPs of the cell in the same slot in consideration of frequency-domain inter-cell interference cancellation between neighboring cells.

The BS may configure at least one DL/UL BWP for a UE associated with the wideband CC, activate at least one of DL/UL BWP(s) configured at a specific time point (by L1 signaling (e.g., DCI), MAC signaling, or RRC signaling), and indicate switching to another configured DL/UL BWP (by L1 signaling, MAC signaling, or RRC signaling). Further, upon expiration of a timer value (e.g., a BWP inactivity timer value), the UE may switch to a predatermined DL/UL BWP. The activated DL/UL BWP may be referred to as an active DL/UL BWP. During initial access or before an RRC connection setup, the UE may not receive a configuration for a DL/UL BWP from the BS. ADL/UL BWP that the UE assumes in this situation is defined as an initial active DL/UL BWP.

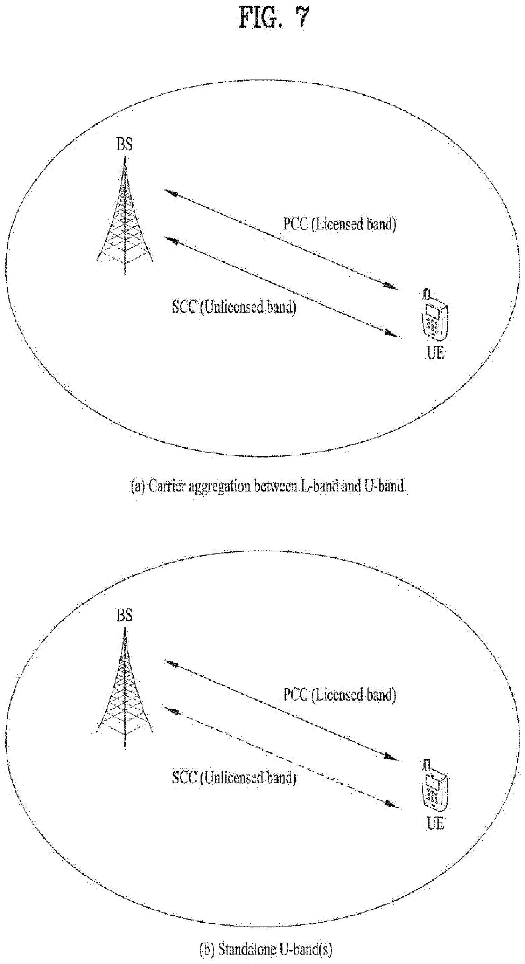

FIG. 7 illustrates an exemplary wireless communication system supporting an unlicensed band applicable to the present disclosure.

In the following description, a cell operating in a licensed band (L-band) is defined as an L-cell, and a carrier of the L-cell is defined as a (DL/UL) LCC. A cell operating in an unlicensed band (U-band) is defined as a U-cell, and a carrier of the U-cell is defined as a (DL/UL) UCC. The carrier/carrier-frequency of a cell may refer to the operating frequency (e.g., center frequency) of the cell. A cell/carrier (e.g., CC) is commonly called a cell.

When a BS and a UE transmit and receive signals on carrier-aggregated LCC and UCC as illustrated in FIG. 7(a), the LCC and the UCC may be configured as a primary CC (PCC) and a secondary CC (SCC), respectively. The BS and the UE may transmit and receive signals on one UCC or on a plurality of carrier-aggregated UCCs as illustrated in FIG. 7(b). In other words, the BS and UE may transmit and receive signals only on UCC(s) without using any LCC. For an SA operation, PRACH, PUCCH, PUSCH, and SRS transmissions may be supported on a UCell.

Signal transmission and reception operations in an unlicensed band as described in the present disclosure may be applied to the afore-mentioned deployment scenarios (unless specified otherwise).

Unless otherwise noted, the definitions below are applicable to the following terminologies used in the present disclosure.

- Channel: a carrier or a part of a carrier composed of a contiguous set of RBs in which a channel access procedure (CAP) is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl} = 9$ $\mu$s. The BS or the UE senses the slot during a sensing slot duration. When power detected for at least 4 $\mu$s within the sensing slot duration is less than an energy detection threshold Xthresh, the sensing slot duration Tsl is be considered to be idle. Otherwise, the sensing slot duration Tsl is considered to be busy. CAP may also be called listen before talk (LBT).
- Channel occupancy: transmission(s) on channel(s) from the BS/UE after a CAP.
- Channel occupancy time (COT): a total time during which the BS/UE and any BS/UE(s) sharing channel occupancy performs transmission(s) on a channel after a CAP. Regarding COT determination, if a transmission gap is less than or equal to 25 $\mu$s, the gap duration may be counted in a COT. The COT may be shared for transmission between the BS and corresponding UE(s).

- DL transmission burst: a set of transmissions without any gap greater than 16 µs from the BS. Transmissions from the BS, which are separated by a gap exceeding 16 µs are considered as separate DL transmission bursts. The BS may perform transmission(s) after a gap without sensing channel availability within a DL transmission burst.
- UL transmission burst: a set of transmissions without any gap greater than 16 µs from the UE. Transmissions from the UE, which are separated by a gap exceeding 16 µs are considered as separate UL transmission bursts. The UE may perform transmission(s) after a gap without sensing channel availability within a DL transmission burst.
- Discovery burst: a DL transmission burst including a set of signal(s) and/or channel(s) confined within a window and associated with a duty cycle. The discovery burst may include transmission(s) initiated by the BS, which includes a PSS, an SSS, and a cell-specific RS (CRS) and further includes a non-zero power CSI-RS. In the NR system, the discover burst includes may include transmission(s) initiated by the BS, which includes at least an SS/PBCH block and further includes a CORESET for a PDCCH scheduling a PDSCH carrying SIB1, the PDSCH carrying SIB1, and/or a non-zero power CSI-RS.

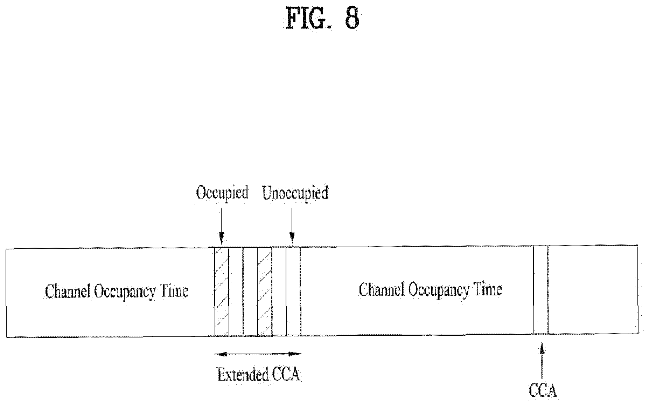

FIG. 8 illustrates an exemplary method of occupying resources in an unlicensed band.

Referring to FIG. 8, a communication node (e.g., a BS or a UE) operating in an unlicensed band should determine whether other communication node(s) is using a channel, before signal transmission. For this purpose, the communication node may perform a CAP to access channel(s) on which transmission(s) is to be performed in the unlicensed band. The CAP may be performed based on sensing. For example, the communication node may determine whether other communication node(s) is transmitting a signal on the channel(s) by carrier sensing (CS) before signal transmission. Determining that other communication node(s) is not transmitting a signal is defined as confirmation of clear channel assessment (CCA). In the presence of a CCA threshold (e.g., Xthresh) which has been predefined or configured by higher-layer (e.g., RRC) signaling, the communication node may determine that the channel is busy, when detecting energy higher than the CCA threshold in the channel. Otherwise, the communication node may determine that the channel is idle. When determining that the channel is idle, the communication node may start to transmit a signal in the unlicensed band. CAP may be replaced with LBT.

Table 7 describes an exemplary CAP supported in NR-U.

[Table 7]

| | Type | Explanation |
|---|---|---|
| DL | Type 1 CAP | CAP with random backoff<br>- time duration spanned by the sensing slots that are sensed to be idle before a downlink transmission(s) is random |
| DL | Type 2 CAP<br>- Type 2A, 2B, 2C | CAP without random backoff<br>- time duration spanned by sensing slots that are sensed to be idle before a downlink transmission(s) is deterministic |
| UL | Type 1 CAP | CAP with random backoff<br>- time duration spanned by the sensing slots that are sensed to be idle before a downlink transmission(s) is random |
| UL | Type 2 CAP<br>- Type 2A, 2B, 2C | CAP without random backoff<br>- time duration spanned by sensing slots that are sensed to be idle before a downlink transmission(s) is deterministic |

In a wireless communication system supporting an unlicensed band, one cell (or carrier (e.g., CC)) or BWP configured for a UE may be a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information. A plurality of LBT-SBs may be included in the BWP of a cell (or carrier). An LBT-SB may be, for example, a 20-MHz band. The LBT-SB may include a plurality of contiguous (P)RBs in the frequency domain, and thus may be referred to as a (P)RB set.

In Europe, two LBT operations are defined: frame based equipment (FBE) and load based equipment (LBE). In FBE, one fixed frame is made up of a channel occupancy time (e.g., 1 to 10 ms), which is a time period during which once a communication node succeeds in channel access, the communication node may continue transmission, and an idle period corresponding to at least 5% of the channel occupancy time, and CCA is defined as an operation of observing a channel during a CCA slot (at least 20 μs) at the end of the idle period. The communication node performs CCA periodically on a fixed frame basis. When the channel is unoccupied, the communication node transmits during the channel occupancy time, whereas when the channel is occupied, the communication node defers the transmission and waits until a CCA slot in the next period.

In LBE, the communication node may set q∈{4, 5, ... , 32} and then perform CCA for one CCA slot. When the channel is unoccupied in the first CCA slot, the communication node may secure a time period of up to (13/32)q ms and transmit data in the time period. When the channel is occupied in the first CCA slot, the communication node randomly selects N∈{1, 2, ... , q}, stores the selected value as an initial value, and then senses a channel state on a CCA slot basis. Each time the channel is unoccupied in a CCA slot, the communication node decrements the stored counter value by 1. When the counter value reaches 0, the communication node may secure a time period of up to (13/32)q ms and transmit data.

An eNB or UE of an LTE/NR system should also perform LBT for signal transmission in an unlicensed band (referred to as a U-band for convenience). In addition, when the eNB or UE of the LTE/NR system transmits a signal, other communication nodes such as Wi-Fi should also perform LBT so that the eNB or the UE should not cause transmission interference. For example, in the Wi-Fi standard (801.11ac), a CCA threshold is defined as -62 dBm for a non-Wi-Fi signal and -82 dBm for a Wi-Fi signal. For example, when a signal other than the Wi-Fi signal is received by a station (STA) or an access point (AP) with a power of -62 dBm or more, the STA or AP does not transmit other signals in order not to cause interference.

A UE performs a Type 1 or Type 2 CAP for a UL signal transmission in an unlicensed band. In general, the UE may perform a CAP (e.g., Type 1 or Type 2) configured by a BS, for a UL signal transmission. For example, CAP type indication information may be included in a UL grant (e.g., DCI format 0_0 or DCI format 0_1) that schedules a PUSCH transmission.

In the Type 1 UL CAP, the length of a time period spanned by sensing slots sensed as idle before transmission(s) is random. The Type 1 UL CAP may be applied to the following transmissions.

- PUSCH/SRS transmission(s) scheduled and/or configured by BS
- PUCCH transmission(s) scheduled and/or configured by BS
- Transmission(s) related to random access procedure (RAP)

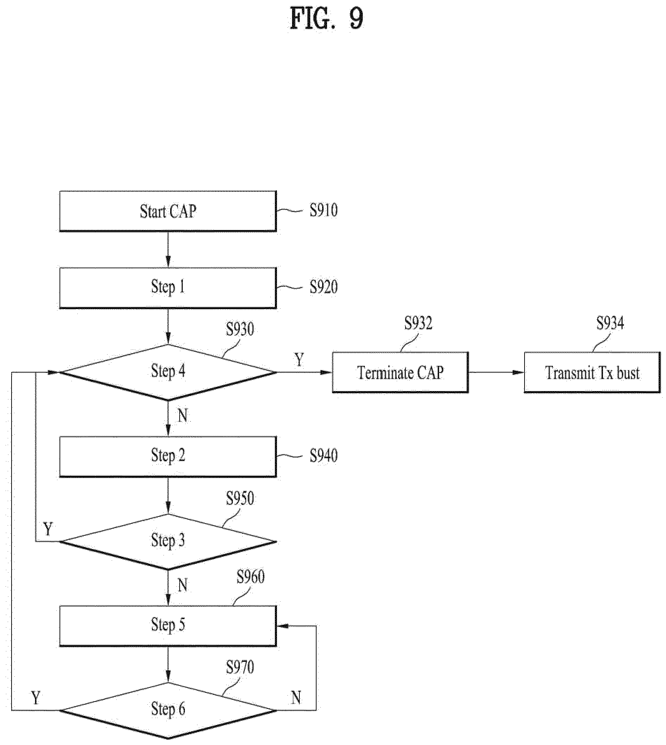

FIG. 9 illustrates a Type 1 CAP among CAPs of a UE for a UL signal transmission in an unlicensed band applicable to the present disclosure.

First, UL signal transmission in the unlicensed band will be described with reference to FIG. 9.

The UE may sense whether a channel is idle for a sensing slot duration in a defer duration Td. After a counter N is decremented to 0, the UE may perform a transmission (S934). The counter N is adjusted by sensing the channel for additional slot duration(s) according to the following procedure.

Step 1) Set N=Ninit where Ninit is a random number uniformly distributed between 0 and CWp, and go to step 4 (S920).

Step 2) If N > 0 and the UE chooses to decrement the counter, set N=N-1 (S940).

Step 3) Sense the channel for an additional slot duration, and if the additional slot duration is idle (Y), go to step 4. Else (N), go to step 5 (S950).

Step 4) If N=0 (Y) (S930), stop CAP (S932). Else (N), go to step 2.

Step 5) Sense the channel until a busy sensing slot is detected within the additional defer duration Td or all slots of the additional defer duration Td are sensed as idle (S960).

Step 6) If the channel is sensed as idle for all slot durations of the additional defer duration Td (Y), go to step 4. Else (N), go to step 5 (S970).

Table 8 illustrates that mp, a minimum CW, a maximum CW, a maximum channel occupancy time (MCOT), and an allowed CW size applied to a CAP vary according to channel access priority classes.

[Table 8]

| Channel Access Priority Class (p) | $m_p$ | CWmin,p | $CW_{max, P}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1 023} |
| 4 | 7 | 15 | 1023 | 6 or 10 ms | {15,31,63,127,255,511,1 023} |

The defer duration Td includes a duration Tf (16 μs) immediately followed by mp consecutive slot durations where each slot duration Tsl is 9 μs, and Tf includes a sensing slot duration Tsl at the start of the 16-us duration. CWmin,p <= CWp <= CWmax,p. CWp is set to CWmin,p, and may be updated before Step 1 based on an explicit/implicit reception response to a previous UL burst (e.g., PUSCH) (CW size update). For example, CWp may be initialized to CWmin,p based on an explicit/implicit reception response to the previous UL burst, may be increased to the next higher allowed value, or may be maintained to be an existing value.

In the Type 2 UL CAP, the length of a time period spanned by sensing slots sensed as idle before transmission(s) is deterministic. Type 2 UL CAPs are classified into Type 2A UL CAP, Type 2B UL CAP, and Type 2C UL CAP. In the Type 2A UL CAP, the UE may transmit a signal immediately after the channel is sensed as idle during at least a sensing duration Tshort_dl (=25 μs). Tshort_dl includes a duration Tf (=16 μs) and one immediately following sensing slot duration. In the Type 2A UL CAP, Tf includes a sensing slot at the start of the duration. In the Type 2B UL CAP, the UE may transmit a signal immediately after the channel is sensed as idle during a sensing slot duration Tf (=16 μs). In the Type 2B UL CAP, Tf includes a sensing slot within the last 9 μs of the duration. In the Type 2C UL CAP, the UE does not sense a channel before a transmission.

To allow the UE to transmit UL data in the unlicensed band, the BS should succeed in an LBT operation to transmit a UL grant in the unlicensed band, and the UE should also succeed in an LBT operation to transmit the UL data. That is, only when both of the BS and the UE succeed in their LBT operations, the UE may attempt the UL data transmission. Further, because a delay of at least 4 msec is involved between a UL grant and scheduled UL data in the LTE system, earlier access from another transmission node coexisting in the unlicensed band during the time period may defer the scheduled UL data transmission of the UE. In this context, a method of increasing the efficiency of UL data transmission in an unlicensed band is under discussion.

To support a UL transmission having a relatively high reliability and a relatively low time delay, NR also supports CG type 1 and CG type 2 in which the BS preconfigures time, frequency, and code resources for the UE by higher-layer signaling (e.g., RRC signaling) or both of higher-layer signaling and L1 signaling (e.g., DCI). Without receiving a UL grant from the BS, the UE may perform a UL transmission in resources configured with type 1 or type 2. In type 1, the periodicity of a CG, an offset from SFN=0, time/frequency resource allocation, a repetition number, a DMRS parameter, an MCS/TB size (TBS), a power control parameter, and so on are all configured only by higher-layer signaling such as RRC signaling, without L1 signaling. Type 2 is a scheme of configuring the periodicity of a CG and a power control parameter by higher-layer signaling such as RRC signaling and indicating information about the remaining resources (e.g., the offset of an initial transmission timing, time/frequency resource allocation, a DMRS parameter, and an MCS/TBS) by activation DCI as L1 signaling.

Now, DL signal transmission in a U-band will be described with reference to FIG. 9.

A BS may perform one of the following CAPs for DL signal transmission in the U-band.

(1) Type 1 DL CAP method

In a Type 1 DL CAP, the length of a time duration spanned by sensing slots that are sensed to be idle before transmission(s) is random. The Type 1 DL CAP may be applied to the following transmissions.

- Transmission(s) initiated by the BS, including (i) a unicast PDSCH with user plane data, or (ii) a unicast PDSCH with user plane data and a unicast PDCCH scheduling the user plane data, or
- Transmission(s) initiated by the BS, with (i) only a discovery burst, or (ii) a discovery burst multiplexed with non-unicast information.

Referring to FIG. 9, the BS may first sense whether a channel is idle for a sensing slot duration of a defer duration Td. After a counter N is decremented to 0, transmission may be performed (S934). The counter N is adjusted by sensing the channel for additional slot duration(s) according to the following procedures.

Step 1) Set N=Ninit where Ninit is a random number uniformly distributed between 0 and CWp, and go to step 4 (S920).

Step 2) If N > 0 and the BS chooses to decrement the counter, set N=N-1 (S940).

Step 3) Sense the channel for an additional slot duration, and if the additional slot duration is idle (Y), go to step 4. Else (N), go to step 5 (S950).

Step 4) If N=0 (Y) (S930), stop a CAP (S932). Else (N), go to step 2.

Step 5) Sense the channel until a busy sensing slot is detected within the additional defer duration Td or all slots of the additional defer duration Td are sensed to be idle (S960).

Step 6) If the channel is sensed to be idle for all slot durations of the additional defer duration Td (Y), go to step 4. Else (N), go to step 5 (S970).

Table 9 illustrates that mp, a minimum contention window (CW), a maximum CW, a maximum channel occupancy time (MCOT), and an allowed CW size, which are applied to a CAP vary according to channel access priority classes.

[Table 9]

| Channel Access Priority Class (p) | $m_p$ | CWmin,p | CWmax, p | Tmcot,p | Allowed CWp sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,10 23} |

The defer duration Td includes a duration Tf (16 $\mu$s) immediately followed by mp consecutive sensing slot durations where each sensing slot duration Tsl is 9 $\mu$s, and Tf includes the sensing slot duration Tsl at the start of the 16-$\mu$s duration.

CWmin,p <= CWp <= CWmax,p. CWp is set to CWmin,p, and may be updated (CW size update) before Step 1 based on HARQ-ACK feedback (e.g., ratio of ACK signals or NACK signals) for a previous UL burst (e.g., PDSCH). For example, CWp may be initialized to CWmin,p based on HARQ-ACK feedback for the previous UL burst, may be increased to the next highest allowed value, or may be maintained at an existing value.

(2) Type 2 DL CAP method

In a Type 2 DL CAP, the length of a time duration spanned by sensing slots sensed to be idle before transmission(s) is deterministic. Type 2 DL CAPs are classified into Type 2A DL CAP, Type 2B DL CAP, and Type 2C DL CAP.

The Type 2A DL CAP may be applied to the following transmissions. In the Type 2A DL CAP, the BS may transmit a signal immediately after a channel is sensed to be idle during at least a sensing duration Tshort_dl of 25 $\mu$s. Tshort_dl includes a duration Tf (= 16 $\mu$s) and one immediately following sensing slot duration. Tf includes a sensing slot at the start of the duration.

- (i) Transmission(s) initiated by the BS, with (i) only a discovery burst, or (ii) a discovery burst multiplexed with non-unicast information, or
- Transmission(s) of the BS after a gap of 25 $\mu$s from transmission(s) by the UE within shared channel occupancy.

The Type 2B DL CAP is applicable to transmission(s) performed by the BS after a gap of 16 $\mu$s from transmission(s) by the UE within shared channel occupancy. In the Type 2B DL CAP, the BS may transmit a signal immediately after a channel is sensed to be idle during Tf=16 $\mu$s. Tf includes a sensing slot within the last 9 $\mu$s of the duration. The Type 2C DL CAP is applicable to transmission(s) performed by the BS after a maximum of a gap of 6 $\mu$s from transmission(s) by the UE within shared channel occupancy. In the Type 2C DL CAP, the BS does not sense a channel before performing transmission.

**Power Headroom Reporting (PHR)**

A PHR procedure is used to provide a serving gNB with how much transmission power is left for the UE to use, in addition to power being used by current transmission. A power headroom may be calculated by an equation below.

**[Equation 1]**

$$\text{Power Headroom} = \text{UE Max Transmission Power} - \text{PUSCH Power} = \text{Pmax} - \text{P\_pusch}$$

If a power headroom value is (+), this indicates "I still have some space under the maximum power", implying "I can transmit more data"

If the power headroom value is (-), this indicates "I am already transmitting the power greater than what I am allowed to transmit".

Specifically, the PHR procedure is used to provide the serving gNB with the following types of power headroom related information.

- Type 1 power headroom: the difference between the maximum transmission power of the UE and the estimated power for a UL shared channel (UL-SCH) transmission per activated serving cell
- Type 2 power headroom: the difference between the maximum transmission power of the UE and the estimated power for a UL-SCH and PUCCH transmission in a special cell (SpCell) of another MAC entity
- Type 3 power headroom: the difference between the maximum transmission power of the UE and the estimated power for sounding reference signal (SRS) transmission per activated serving cell.

Before a description of proposed methods, NR-based channel access schemes for an unlicensed band used in the present disclosure are classified as follows.

- Category 1 (Cat-1): the next transmission immediately follows the previous transmission after a switching gap within a COT, and the switching gap is shorter than 16 $\mu$s, including even a transceiver turn-around time. Cat-1 LBT may correspond to the above-described Type 2C CAP.
- Category 2 (Cat-2): an LBT method without backoff. Once a channel is confirmed to be idle during a specific time period shortly before transmission, the transmission may be performed immediately. Cat-2 LBT may be subdivided according to the length of a minimum sensing duration required for channel sensing immediately before a transmission. For example, Cat-2 LBT with a minimum sensing duration of 25 $\mu$s may correspond to the above-described Type 2A CAP, and Cat-2 LBT with a minimum sensing duration of 16 $\mu$s may correspond to the above-described Type 2B CAP. The minimum sensing durations are merely exemplary, and a minimum sensing duration less than 25 $\mu$s or 16 $\mu$s (e.g., a minimum sensing duration of 9 $\mu$s) may also be available.
- Category 3 (Cat-3): an LBT method with fixed contention window size (CWS)i-based backoff. A transmitting entity selects a random number N in a range of 0 to a (fixed) maximum CWS value and decrements a counter value each time it determines that a channel is idle. When the counter value reaches 0, the transmitting entity is allowed to perform a transmission.
- Category 4 (Cat-4): an LBT method with variable CWS-based backoff. A transmitting entity selects a random number N in a range of 0 to a (variable) maximum CWS value and decrements a counter value, each time it determines that a channel is idle. When the counter value reaches 0, the transmitting entity is allowed to perform a transmission. If the transmitting entity receives a feedback indicating reception failure of the transmission, the transmitting entity increases the maximum CWS value by one level, selects a random number again within the increased CWS value, and performs an LBT procedure. Cat-4 LBT may correspond to the above-described Type 1 CAP.

The following description is given with the appreciation that the term band may be interchangeably used with CC/cell, and a CC/cell (index) may be replaced with a BWP (index) configured within the CC/cell, or a combination of the CC/cell (index) and the BWP (index).

Terms are defined as follows.

- UCI: control information transmitted on UL by the UE. UCI includes various types of control information (i.e., UCI types). For example, the UCI may include an HARQ-ACK (simply, A/N or AN), an SR, and CSI.
- PUCCH: a physical layer UL channel for UCI transmission. For convenience, PUCCH resources configured and/or indicated for A/N, SR, and CSI transmission are referred to as A/N PUCCH resources, SR PUCCH resources, and CSI PUCCH resources, respectively.
- UL grant DCI: DCI for a UL grant. For example, UL grant DCI means DCI formats 0_0 and 0_1, and is transmitted on a PDCCH.
- DL assignment/grant DCI: DCI for a DL grant. For example, DL assignment/grant DCI means DCI formats 1_0 and 1_1, and is transmitted on a PDCCH.
- PUSCH: a physical layer UL channel for UL data transmission.
- Slot: a basic time unit (TU) (or time interval) for data scheduling. A slot includes a plurality of symbols. Herein, a symbol includes an OFDM symbol (e.g., CP-OFDM symbol or DFT-s-OFDM symbol). In this specification, the terms symbol, OFDM-based symbol, OFDM symbol, CP-OFDM symbol, and DFT-s-OFDM symbol may be replaced with each other.
- Performing LBT for channel X/with respect to channel X: This means performing LBT in order to confirm whether to transmit channel X. For example, a CAP may be performed before transmission of channel X is started.

On LAA UL, with the introduction of an asynchronous HARQ procedure, there is no additional channel such as a physical HARQ indicator channel (PHICH) for indicating HARQ-ACK information for a PUSCH to the UE. Therefore, accurate HARQ-ACK information may not be used to adjust a CW size in a UL LBT procedure. In the UL LBT procedure, when a UL grant is received in the n-th subframe, the first subframe of the most recent UL transmission (TX) burst prior to the (n-3)-th subframe has been configured as a reference subframe, and the CW size has been adjusted based on a new data indicator (NDI) for a HARQ process ID corresponding to the reference subframe. That is, when the BS toggles NDIs per one or more transport blocks (TBs) or indicates retransmission for one or more TBs, a method has been introduced of increasing a corresponding CW size to the next largest CW size of a CW size currently applied in a set for preagreed CW sizes under the assumption that transmission of a PUSCH has failed in the reference subframe due to collision of the PUSCH with other signals or initializing a CW size to a minimum value (e.g., $CW_{min}$) under the

assumption that the PUSCH in the reference subframe has been successfully transmitted without any collision with other signals.

In the NR system, up to 400 MHz per CC may be supported. When a UE operating in such a wideband CC always operates with an RF module turned on for the entire CC, battery consumption of the UE may increase.

Alternatively, considering various communication use cases such as eMBB, URLLC, and/or mMTC operating within a single wideband CC, a different numerology (e.g., SCS) may be supported for each frequency band within the CC.

Each UE may have a different maximum bandwidth capability. In this regard, the BS may instruct the UE to operate only in a partial bandwidth instead of the total bandwidth of the wideband CC. The partial bandwidth may be defined as a BWP for convenience. The BWP may include contiguous RBs on the frequency axis and correspond to one numerology such as an SCS, a CP length, and/or a slot/mini-slot duration.

The BS may configure multiple BWPs even in one CC configured for the UE. For example, the BS may configure a BWP occupying a relatively small frequency area in a PDCCH monitoring slot and schedule a PDSCH scheduled by a PDCCH in a BWP allocated to a frequency area larger than a BWP for the PDCCH.

Alternatively, when UEs are concentrated on a specific BWP, the BS may configure another BWP in which some UEs may transmit and signal signals, for load balancing.

Alternatively, the BS may exclude some middle spectrum of the total bandwidth and configure both-side BWPs in the same slot in consideration of frequency-domain inter-cell interference cancellation between neighboring cells. That is, the BS may configure at least one DL/UL BWP for a UE associated with the wideband CC and activate at least one of DL/UL BWPs configured at a specific time point by L1 signaling, MAC control element (CE) signaling, or radio resource control (RRC) signaling.

Further, a currently activated BWP may switch to another DL/UL BWP by L1 signaling, MAC CE signaling, or RRC signaling or, upon expiration of a timer value based on a timer, the activated BWP may switch to a predetermined DL/UL BWP.

The activated DL/UL BWP is defined as an active DL/UL BWP. During initial access or before an RRC connection setup, the UE may fail to receive a configuration for a DL/UL BWP. A DL/UL BWP that the UE assumes in this situation is defined as an initial active DL/UL BWP.

In NR-unlicensed (NR-U), when the bandwidth of a BWP allocated to the BS and/or the UE is above 20 MHz, the BWP may be divided into units of an integer multiple of 20 MHz, for fair coexistence with Wi-Fi, and LBT may be performed in units of 20 MHz. A band of a 20-MHz unit distinguished for the above-described LBT may be referred to as a subband.

For UL data transmission by the UE in a U-band, the BS should succeed in LBT for UL grant transmission in the U-band and the UE should also succeed in LBT for UL data transmission. That is, only when both LBT performed by the BS and LBT performed by the UE are successful, the UE may attempt to transmit UL data. In the LTE system, since a delay of a minimum of 4 msec occurs between the UL grant and the UL data scheduled by the UL grant, earlier access from another transmission node coexisting in the U-band during the corresponding time period may defer UL data transmission. In this context, a method of increasing the efficiency of UL data transmission in the U-band needs to be discussed.

In LTE LAA, the BS may inform the UE of an autonomous uplink (AUL) subframe or slot for autonomous UL transmission, in which the UE may transmit the UL data without receiving a UL grant, through an X-bit bitmap (e.g., a 4-bit bitmap). When autonomous transmission activation is indicated to the UE, the UE may transmit the UL data in a subframe or slot indicated through the X-bit bitmap even without receiving the UL grant. Upon transmitting a PDSCH to the UE, the BS also transmits a PDCCH, which is scheduling information required for decoding. Likewise, upon transmitting a PUSCH on AUL to the BS, the UE also transmits AUL UCI, which is information required when the BS decodes the PUSCH. The AUL UCI includes information needed to receive an AUL PUSCH, such as a HARQ identification (ID), an NDI, a redundancy version (RV), an AUL subframe starting position, and an AUL subframe ending position, and information for sharing a UE-initiated COT with the BS.

Specifically, "sharing a UE-initiated COT with the BS" may indicate the following procedure.

A part of a channel occupied by the UE may be assigned to the BS through random backoff-based category 4 LBT or Type 1 CAP, and the BS may perform one-shot LBT of 25 $\mu$sec based on a timing gap resulting from non-use of the ending symbol by the UE. In this case, when the channel is idle as a result of performing one-shot LBT, the BS may transmit a PDCCH and/or a PDSCH. This procedure is called COT sharing between the UE and the BS.

To support UL transmission having relatively high reliability and relatively low time delay, NR also supports CG Type 1 and CG Type 2 in which the BS configures time, frequency, and code domain resources for the UE by higher-layer signaling (e.g., RRC signaling) or a combination of higher-layer signaling and L1 signaling (e.g., DCI).

In other words, the UE may perform UL transmission in resources configured with Type 1 or Type 2 even without receiving a UL grant from the BS. In Type 1, the periodicity of a CG, an offset from SFN=0, time/frequency resource allocation, a repetition number, a demodulation reference signal (DMRS) parameter, a modulation and coding scheme (MCS)/TBS, a power control parameter, and so on are all configured only by higher-layer signaling such as RRC signaling.

Type 2 is a scheme of configuring the periodicity of a CG and a power control parameter by higher-layer signaling such as RRC signaling and indicating information about the remaining resources, such as the offset of an initial transmission timing, time/frequency resource allocation, a DMRS parameter, and an MCS/TBS, by activation DCI as L1 signaling.

AUL of LTE LAA and a CG of NR show a big difference in terms of a method of transmitting HARQ-ACK feedback for a PUSCH that the UE has transmitted without receiving the UL grant and in terms of the presence or absence of UCI transmitted along with the PUSCH. While a HARQ process is determined by an equation of a symbol index, a symbol periodicity, and the number of HARQ processes in the CG of NR, explicit HARQ-ACK feedback information is transmitted in AUL downlink feedback information (AUL-DFI) in LTE LAA.

Further, in LTE LAA, UCI including information such as a HARQ ID, an NDI, and an RV is also transmitted in AUL UCI whenever AUL PUSCH transmission is performed. In the case of the CG of NR, the BS identifies the UE by time/frequency resources and DMRS resources used by the UE for PUSCH transmission, whereas in the case of LTE LAA, the BS identifies the UE by a UE ID explicitly included in the AUL UCI transmitted together with the PUSCH as well as the DMRS resources.

The BS may configure a CG resource as Type 1 or Type 2 for the UE, and the UE may perform UL transmission by performing LBT on the configured time/frequency resource. The BS may share a COT acquired through Cat-4 LBT with the UE, so that the UE may perform only Cat-2 LBT within the COT of the BS to increase a channel access probability. Likewise, the UE may share a COT obtained by performing Cat-4 LBT for CG PUSCH transmission or DG PUSCH transmission outside the COT of the BS with the BS, so that the BS may perform DL transmission by performing Cat-2 LBT within the remaining COT after the UE performs UL transmission.

When such UL-to-DL COT sharing is performed, transmission powers of the UE and the BS may be different. If the BS transmits a signal with a relatively large DL power in a COT acquired by the UE based on an energy detection (ED) threshold calculated based on a maximum UL power configured for the UE, this may cause serious interference or transmission collision with other neighboring nodes. Therefore, the BS may configure an ED threshold for UL-to-DL COT sharing for the UE by higher-layer signaling such as RRC signaling.

Accordingly, the UE may have a first ED threshold calculated based on the maximum UL power which is configured by the BS according to an energy detection threshold adaptation procedures defined in Clause 4.1.5 of 3GPP TS 37.213 and a second ED threshold configured by the BS for UL-to-DL COT sharing and selectively use one ED threshold according to whether a COT is shared during UL transmission. Alternatively, the second ED threshold configured by the BS may always be used as a default value.

In this case, the UE may inform the BS of whether COT sharing is allowed by including information about which ED threshold or UL power has been used to perform LBT and UL transmission in CG-UCI. Here, "the UE informs the BS of whether COT sharing is allowed" may mean that the UE informs the BS of whether other DL transmission in addition to PDCCH transmission up to 2 symbols is possible within the shared COT.

In the case of DL-to-UL COT sharing, the UE may receive a signal such as a GC-PDCCH including information about whether a CG-PUSCH may be transmitted within the COT from the BS and perform Cat-2 LBT. Then, if a channel is in an idle state, the UE may perform UL transmission.

In this case, an ED threshold to be used for Cat-2 LBT may use the ED threshold configured by the BS or use the ED threshold of the UE configured based on a UL power of the UE as described above.

Unlike LTE AUL, if a frequency-axis resource for a CG is configured as a wideband of 20 MHz or more, the frequency-axis resource may include a plurality of LBT subbands in units of 20 MHz. In order for the UE to perform UL transmission on a corresponding CG-PUSCH resource, transmission is allowed only when the UE succeeds in LBT in all LBT subbands as a result of performing LBT in each LBT subband. In addition, even when the remaining COT is shared and used for DL transmission, DL transmission may be allowed only in subbands that are equal to or less than LBT subbands in which the UE succeeds in LBT.

As described in Clause 4.2.1 of 3GPP TS 37.213, if conditions described in [Table 10] below are satisfied, a transmission operation of the UE without LBT is supported when a DG-PUSCH on LTE AUL is scheduled in consecutive subframes without a gap with an AUL-PUSCH.

**[Table 10]**

If the UE is scheduled by a UL grant received on a carrier to transmit a PUSCH transmission(s) starting from subframe $n$ on the same carrier using Type 1 channel access procedure and if at least for the first scheduled subframe occupies $N_{\mathrm{RB}}^{\mathrm{UL}}$ resource blocks and the indicated 'PUSCH starting position is OFDM symbol zero, and if the UE starts autonomous UL transmissions before subframe $n$ using Type 1 channel access procedure on the same carrier, the UE may transmit UL transmission(s) according to the received UL grant from subframe n without a gap, if the priority class value of the performed channel access procedure is larger than or equal to priority class value indicated in the UL grant, and the autonomous UL transmission in the subframe preceding subframe n shall end at the last OFDM symbol of the subframe regardless of the higher layer parameter *endingSymbolAUL.* The sum of the lengths of the autonomous UL transmission(s) and the scheduled UL transmission(s) shall not exceed the maximum channel occupancy time corresponding to the priority class value used to perform the autonomous uplink channel access procedure. Otherwise, the UE shall terminate the ongoing autonomous UL transmission at least one subframe before the start of the UL transmission according to the received UL grant on the same carrier.

Even in NR-U, if the DG-PUSCH is continuously scheduled without a gap with a time axis resource for the CG configured for the UE, i.e., in the case of CG-DG back-to-back scheduling, the UE may transmit the DG-PUSCH without LBT only when a frequency band of the DG-PUSCH has the same LBT subbands as a frequency band of the CG-PUSCH. In this case, there should be no gap between the ending symbol of the CG-PUSCH and the starting symbol of the DG-PUSCH. If the gap exists or the LBT subbands are not equal, an LBT gap corresponding to specific X symbols immediately before the DG-PUSCH may be required in order for the UE to perform LBT.

In NR, the BS may simultaneously receive PHRs for all CCs/cells through the DG-PUSCH or the CG-PUSCH transmitted in one CC/cell with respect to a plurality of CCs/cells configured for the UE. Each CC/cell may be a U-cell operating in an U-band, a cell operating in an L-band, or a CC/cell in which supplementary UL (SUL) is additionally configured.

There are two types of PHR information that may be included in the DG-PUSCH or the CG-PUSCH: an actual PHR based on the power of a PUSCH used by the UE for actual transmission and a virtual PHR based on a reference transmission format defined in Clause 7.7 of 3GPP TS 38.213. The reference transmission format is a transmission format for virtually calculating a PHR in the absence of PUSCH transmission. For example, such a transmission format may be defined based on one RB and the lowest MCS level.

In the case of the CG-PUSCH or the DG-PUSCH transmitted through a carrier of an L-band, since transmission is always guaranteed, there is no possibility of confusion between the actual PHR and the virtual PHR. However, the CG-PUSCH transmitted through a carrier of a U-band may be transmitted or may be dropped, depending on whether UL LBT is successful. Therefore, if the CG-PUSCH of an NR-U cell including a PHR report is incapable of being transmitted due to failure of LBT or if LBT of the PUSCH of another CC/cell fails, the BS may be confused as to whether a PHR transmitted at a retransmission time point is the actual PHR or the virtual PHR. In order to solve this problem, a method may be considered in which, when the PHR is transmitted through the CG-PUSCH of the NR-U cell, only the virtual PHR is always transmitted or the UE may signal, to the BS, which of the actual PHR and the virtual PHR has been transmitted through CG-UCI.

Hereinafter, proposed methods for solving the above-mentioned problems will be described. Specifically, [Proposed Method #1] to [Proposed Method #3] describe an ED threshold used by the UE based on whether a COT is shared and a method of performing LBT and/or transmitting a PUSCH based on the ED threshold value.

[Proposed Method #4] describes conditions for the UE to transmit the DG-PUSCH without LBT for CG-DG PUSCH back-to-back transmission and the operation of the UE when the conditions are not satisfied.

[Proposed Method #5] and [Proposed Method #6] describe a method for the UE to transmit a PHR.

[Proposed Method #1] to [Proposed Method #6] are not always independently performed. In other words, [Proposed Method #1] to [Proposed Method #6] may be operated/performed alone but two or more proposed methods may be operated/performed in combination.

For example, [Proposed Method #1], [Proposed Method #4], and [Proposed Method #5] may be combined to perform the operation of the UE and/or BS, and [Proposed Method #1], [Proposed Method #2], and [Proposed Method #3] may be combined to perform the operation of the UE and/or the BS. That is, [Proposed Method #1] to [Proposed Method #6] are not optional and are classified for convenience of explanation.

In addition, embodiments of [Proposed Method #1] to [Proposed Method #6] described below according to the present disclosure are not limited to a U-band and may be applied to an operation between the UE and the BS that transmits and receives UL/DL signals through a frequency band in which a CAP based on LBT may be performed.

For example, [Proposed Method #1] to [Proposed Method #6] described below may also be applied to the operation between the UE and the BS that transmits and receives UL/DL signals through a citizen broadband radio service (CBRS) band.

In addition, "performing LBT" may be used as the same meaning as "performing CCA". A series of processes for transmitting and receiving UL/DL signals through a frequency band in an idle state based on LBT and/or CCA is defined as a CAP. Accordingly, performing LBT and/or CCA may have the same meaning as performing the CAP.

**[Proposed Method #1]** Method in which the UE selects an ED threshold to be used for LBT performed before transmitting a CG-PUSCH as follows and indicates the selected ED threshold through CG-UCI, upon receiving a first ED threshold to be used to perform UL LBT for UL-to-DL COT sharing from the BS by higher-layer signaling such as RRC signaling

(1) Method of performing UL LBT based on the first ED threshold configured through higher-layer signaling and transmits the CG-UCI including information about the first ED threshold, in order for the UE to share the remaining COT after transmitting the CG-PUSCH with the BS

(2) Method of performing UL LBT based on a second ED threshold calculated based on a maximum UL power configured by the BS, rather than the first ED threshold configured through higher-layer signaling, and transmitting CG-UCI including information about the second ED threshold, in order for the UE not to allow DL transmission other than PDCCH transmission up to 2 symbols of the BS in the remaining COT after transmitting the CG-PUSCH.

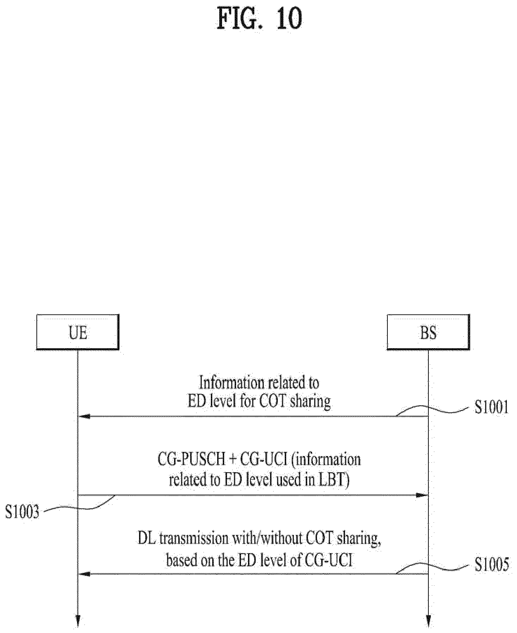

[Proposed Method #1] described above will be described in detail with reference to FIG. 10. The UE may share, with the BS, a COT acquired by performing Cat-4 LBT for CG PUSCH transmission or DG PUSCH transmission, so that the BS may transmit a DL signal and/or a DCL channel after performing Cat-2 LBT within the remaining COT after the UE performs UL transmission.

However, when transmission powers of the UE and the BS are different and the BS transmits the DL signal and/or the DL channel with a relatively large DL power in a COT acquired by the UE based on the second ED threshold calculated based on the maximum UL power configured for the UE, this may cause serious interference or transmission collision with other neighboring nodes. Therefore, the BS may configure the first ED threshold for UL-to-DL COT sharing for the UE by higher-layer signaling such as RRC signaling (S 1001).

In addition, the UE may select one of the second ED threshold calculated based on the maximum UL power configured by the BS and the first ED threshold configured by the BS for UL-to-DL COT sharing, according to whether to allow DL transmission other than PDCCH transmission up to 2 symbols within the COT shared with the BS, and perform UL LBT and UL transmission based on the selected ED threshold.

In this case, the UE may inform the BS of whether DL transmission other than PDCCH transmission up to 2 symbols is permitted within the shared COT, when the UE shares the COT with the BS, by transmitting, in the CG-UCI, information as to which ED threshold (or UL power based on the selected threshold) of the first ED threshold and the second ED threshold has been used to perform LBT and UL transmission. Here, "up to 2 symbols" may mean a time duration corresponding to the length of a maximum of 2 symbols based on a 15-kHz SCS. For example, the length of a maximum of 2 symbols based on the 15-kHz SCS may be a time duration corresponding to the length of a maximum of 4 symbols based on a 30-kHz SCS and a time duration corresponding to the length of a maximum of 8 symbols based on a 60-kHz SCS.

Alternatively, the UE may inform the BS of whether other DL transmission including PDCCH transmission up to 2 symbols is permitted within the shared COT, when the UE shares the COT with the BS, by transmitting information about the length of the remaining COT in the CG-UCI based on 2 symbols for the 15-kHz SCS. As described above, the information about the length of the remaining COT may be included in the CG-UCI based on 4 symbols for the 30-kHz SCS or included in the CG-UCI based on 8 symbols for the 60-kHz SCS.

Alternatively, when the COT is shared, if only PDCCH transmission up to 2 symbols is always allowed, i.e., if DL transmission other than PDCCH transmission up to 2 symbols is not allowed, the UE may indicate that DL transmission other than 2-symbol PDCCH transmission is not allowed by transmitting, in the CG-UCI, information indicating that there is no remaining length of the COT to the BS (S1003). That is, upon receiving the information indicating that there is no remaining length of the COT from the UE through the CG-UCI, the BS may interpret this information as meaning that DL transmission other than maximum 2-symbol PDCCH transmission (based on the 15-kHz SCS) is not allowed. Alternatively, upon receiving the information indicating that there is no remaining length of the COT from the UE through the CG-UCI, the BS may interpret this information as meaning that the UE has transmitted the CG-PUSCH using the second ED threshold instead of the first ED threshold.

That is, if the UE informs the BS through the CG-UCI that UL LBT and UL transmission are performed based on the first ED threshold configured by the BS, the BS may perform DL transmission such as PDSCH transmission of more symbols including PDCCH transmission of 2 symbols by sharing the COT of the UE. In this case, the BS may perform DL transmission based on Cat-2 LBT within the shared COT. In contrast, if the UE informs the BS through the CG-UCI that UL LBT and UL transmission are performed based on the second ED threshold calculated based on the maximum UL power, the BS may identify that DL transmission other than 2-symbol PDCCH transmission using the COT sharing may not be performed. In this case, the BS may perform DL transmission based on Cat-4 LBT (S1005).

In other words, when the BS configures that COT sharing is possible for the UE and the BS transmits a DL signal within the shared COT, if the BS transmits the DL signal based on a relatively large power, the DL signal transmitted by the BS may cause interference or conflict with signals of other nodes. Therefore, the BS may configure the first ED threshold for COT sharing and the UE may perform UL LBT based on the first ED threshold when the COT is shared. For example, if the UE performs UL LBT based on the first ED threshold which is relatively low and transmits a UL signal by determining that a corresponding channel is in an idle state, since this means that other nodes do not transmit signals with power exceeding the first ED threshold in the corresponding channel, this may also mean that there are a relatively small number of signals of other nodes with which the DL signal of the BS will cause interference. Accordingly, the BS may configure the first ED threshold which is relatively low, so that the UE may perform UL LBT based on the first ED threshold while the COT is shared.

However, even if the BS configures that the UE may share the COT, the UE does not always have to share the COT. That is, when the UE should use all of the COT in order to transmit the CG-PUSCH or use the COT with only a very short length to receive another DL signal, the UE may not share the COT and uses all of the COT to transmit the CG-PUSCH.

However, even in this case, if the UE should perform UL LBT using the first ED threshold, the probability of succeeding in UL LBT is reduced, which may lead to a result of reducing only a channel access opportunity of the UE. Therefore, if the COT is not shared, it is favorable for the UE to perform UL LBT using the second ED threshold calculated based on the maximum UL power.

Here, not sharing the COT may mean that other DL signal transmission except for 2-symbol PDCCH transmission of the BS is not allowed within the COT.

Therefore, the UE may selectively use the ED threshold according to whether to share the COT. For example, if the COT is shared, the UE may perform UL LBT using the first ED threshold and, if the COT is not to be shared, the UE may perform UL LBT using the second ED threshold.

In this case, the BS may perform an appropriate operation such as DL transmission and/or UL reception only when the BS identifies whether the UE shares the COT and/or which ED threshold has been used, Accordingly, the UE may transmit related information in the CG-UCI multiplexed with the CG-PUSCH to the BS.

For example, the UE includes and transmits information about whether to share the COT (i.e., information about whether COT sharing is possible) in the CG-UCI. When the BS receives the CG-UCI, the BS may be aware of whether COT sharing is possible and which ED threshold has been used by the UE through the information included in the CG-UCI. For example, if the CG-UCI received by the BS includes the information indicating that COT sharing is possible, the BS may identify the UE has performed UL LBT using the first ED threshold. Conversely, if the CG-UCI includes the information that COT sharing is not possible, the BS may identify that the UE will perform UL LBT using the second ED threshold.

As another example, the UE may include the information about the ED threshold used thereby for UL LBT in the CG-UCI. For example, if the information about the first ED threshold is included in the CG-UCI received by the BS, the BS identifies that the UE has performed UL LBT using the first ED threshold and that COT sharing is possible. Conversely, if the information about the second threshold is included in the CG-UCI received by the BS, the BS may identify that the UE has performed UL LBT using the second ED threshold and that COT sharing is not possible. That is, the UE may explicitly transmit one of the information about which ED threshold is used and the information about whether COT sharing is possible and implicitly transmit the other one to the BS in association with the explicit information.

However, the UE may explicitly include all of the information about which ED threshold is used and the information about whether COT sharing is possible in the CG-UCI and transmit the CG-UCI to the BS.

[Proposed Method #2] Method of using one of (i) a first ED threshold configured through higher-layer signaling and (ii) a second ED threshold calculated by the UE based on a maximum UL power configure by the BS as an ED threshold to be used for LBT performed before the UE transmits a DG-PUSCH, upon receiving the first ED threshold to be used for UL LBT for UL-to-DL COT sharing from the BS through higher-layer signaling such as RRC signaling.

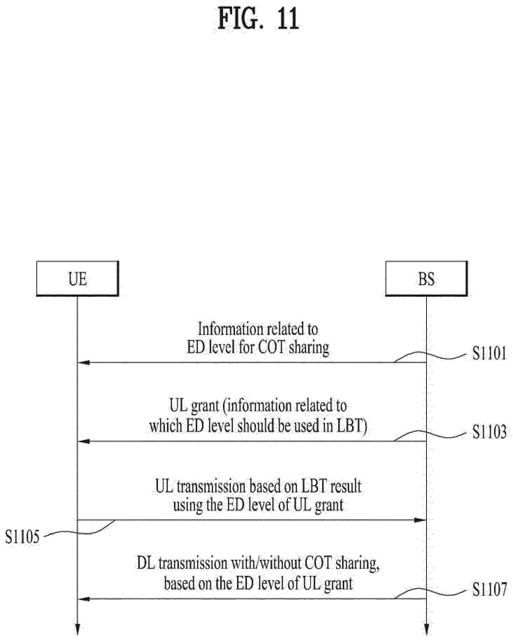

Specifically, [Proposed Method #2] will be described in detail with reference to FIG. 11. In the case of a DG-PUSCH, since there is no method in which the UE informs the BS of which ED threshold has been used through a UL signal such as the CG-UCI as in [Proposed Method #1], the UE may perform UL LBT using an ED threshold indicated by scheduling of a UL grant transmitted by the BS and transmit a PUSCH (S1105). In other words, upon receiving the DG-PUSCH scheduled based on the first ED threshold for UL-to-DL COT sharing from the UE, the BS may transmit other DL (e.g., PDSCH) signals including a 2-symbol PDCCH in the remaining COT after DG-PUSCH transmission ends.

Upon receiving the DG-PUSCH indicating that UL LBT and UL transmission are performed using the second ED threshold calculated by the UE based on the maximum UL power, the BS may transmit the PDCCH of a maximum 2 symbols after DG-PUSCH transmission ends (S1103). To this end, the BS may configure the first ED threshold for UL-to-DL COT sharing for the UE through higher-layer signaling such as RRC signaling (S1101).

In other words, when the BS instructs the UE to use the first ED threshold for COT sharing through the UL grant, the BS may share a COT of the UE to transmit other DL signals and/or DL channels including the PDCCH up to 2 symbols. That is, the BS may perform DL transmission based on Cat-2 LBT within the shared COT. In contrast, when the BS instructs the UE to use the second ED threshold calculated based on the maximum UL power through the UL grant, the BS may transmit only the PDCCH up to 2 symbols within the COT of the UE. In this case, the BS may perform DL transmission based on Cat-4 LBT (S1107).

**[Proposed Method #3]** Method of selecting an ED threshold for Cat-2 LBT based DG-PUSCH or CG-PUSCH transmission by sharing the remaining COT after DL transmission within a COT of the BS, upon receiving a first ED threshold to be used for UL LBT for UL-to-DL COT sharing from the BS through higher-layer signaling such as RRC signaling

    (1) Method of using the first ED threshold configured by the BS
    (2) Method of using a second ED threshold calculated by the UE based on a maximum UL power configured by the BS
    (3) Method of using Max(first ED threshold, second ED threshold)
    (4) Method of using Min(first ED threshold, second ED threshold)

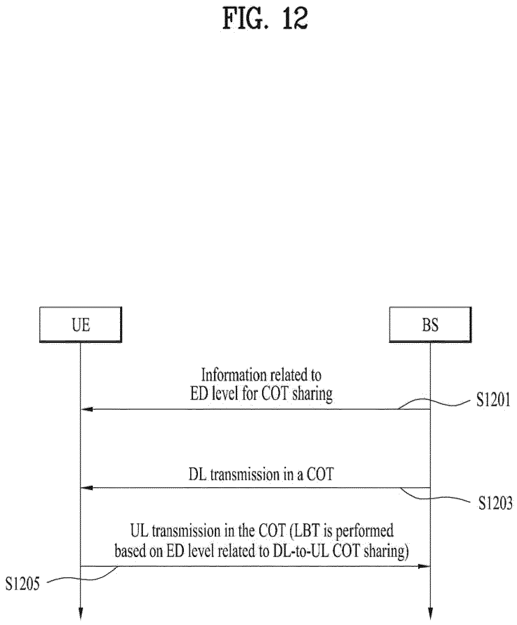

[Proposed Method #3] described above will be described in detail with reference to FIG. 12. The BS may configure the first ED threshold for UL-to-DL COT sharing for the UE through higher-layer signaling such as RRC signaling (S1201). The BS may perform DL transmission (e.g., PDSCH) to the UE using a COT obtained based on Cat-4 LBT (S1203). In the case of DL-to-UL COT sharing, the UE performs Cat-2 LBT by receiving an indication/configuration of whether the CG-PUSCH may be transmitted within the COT from the BS through a physical layer signal such as a GC-PDCCH or through a higher layer signal. If a channel is idle, the UE may perform UL transmission (S1205). In this case, an ED threshold to be used by the UE for Cat-2 LBT may be the first ED threshold configured by the BS as in (1) or the second ED threshold of the UE based on a power configured by the UE using the configured maximum UL power as in (2). Alternatively, the UE may use a larger or smaller value among the first ED threshold of (1) and the second ED threshold of (2) as the ED threshold (S1205).

**[Proposed Method #4]** Method of performing CG-DG PUSCH back-to-back transmission according to the following conditions with respect to a DG-PUSCH which is scheduled based on a UL grant while transmitting a CG-PUSCH after performing Cat-4 LBT on a Configured Grant resource configured by the BS. Here, the CG-UL resource may include a plurality of LBT subbands.

    (1) Method of transmitting the DG-PUSCH continuously immediately after the CG-PUSCH without LBT, when there is no gap between the ending symbol of the CG-PUSCH and the starting symbol of the DG-PUSCH on the time axis, and LBT subband resources of the CG-PUSCH which has been transmitted on the frequency axis and LBT subband resources of the DG-PUSCH which is scheduled are the same or LBT subbands to which the DG-PUSCH is allocated are a subset of LBT subbands of the CG-PUSCH
    (2) Method of dropping specific X symbols, Y CG-PUSCHs, or Z slots, immediately prior to the DG-PUSCH in order to secure an LBT gap before the DG-PUSCH is transmitted, when there is a gap between the ending symbol of the CG-PUSCH and the starting symbol of the DG-PUSCH on the time axis, the LBT subband resources of the CG-PUSCH which has been transmitted on the frequency axis and the LBT subband resources of the CG-PUSCH which is scheduled are different, or the LBT subbands to which the DG-PUSCH is allocated are not included in the LBT subbands of the CG-PUSCH (i.e., the LBT subbands of the DG-PUSCH are not a subset of the LBT subbands of the CG-PUSCH LBT)

In this case, the X, Y, and Z values for how many symbols, how many CG-PUSCHs, and how many slots will be dropped for the LBT gap may use values specified in the standard. Alternatively, the X, Y, and Z values may use values configured/indicated by the BS through higher-layer signaling such as RRC signaling, physical layer signaling such as DCI, or a combination of higher-layer signaling and physical layer signaling. In the above proposed method, DG-PUSCH to CG-PUSCH back-to-back transmission may be performed by rearranging the order of the CG-PUSCH to the DG-PUSCH and the DG-PUSCH to the CG-PUSCH.

In (2), when the priority of the DG-PUSCH is higher than that of the CG-PUSCH, there is a gap between the DG-PUSCH and the CG-PUSCH, or the LBT subband resources of the DG-PUSCH and the LBT subband resources of the CG-PUSCH are different, the UE may drop transmission of the CG-PUSCH following the DG-PUSCH.

In LTE LAA, when the DG-PUSCH is scheduled in consecutive subframes without a gap with an AUL-PUSCH, the UE may transmit the DG-PUSCH without LBT (Clause 4.2.1 of 3GPP TS 37.213).

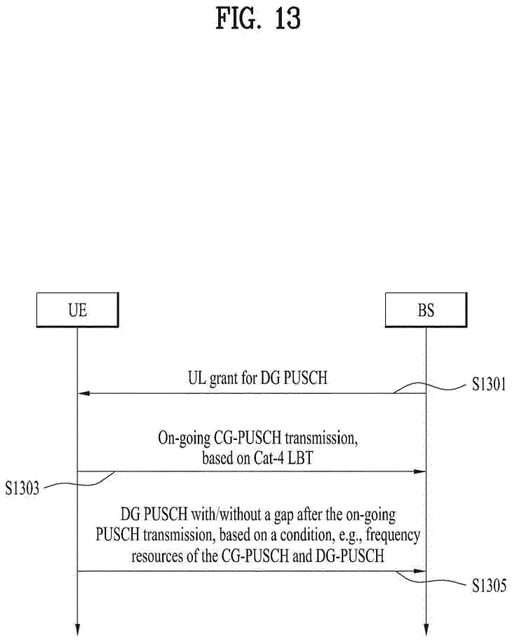

Similarly, [Proposed Method #4] described above will be described in detail with reference to FIG. 13. When the CG-PUSCH is being transmitted based on Cat-4 LBT even in NR-U (S1303), if the DG-PUSCH is continuously scheduled through the UL grant without a gap with a time axis resource for a CG configured for the UE (S1301), i.e., in the case of CG-DG back-to-back scheduling, the UE may transmit the DG-PUSCH without LBT. In this case, unlike LTE, in NR-U, since the bandwidth of the CG resource configured for the UE is greater than 20 MHz, a plurality of LBT subbands may be included in the CG resource. Therefore, in order to continuously transmit the DG-PUSCH without LBT using a COT obtained for the CG-PUSCH, a frequency band of the scheduled DG-PUSCH should be included in a frequency band of the CG-PUSCH. That is, the LBT subbands of the DG-PUSCH should be the same as the LBT subbands of the CG-PUSCH, or the LBT subbands of the DG-PUSCH should be a subset of the LBT subbands of the CG-PUSCH. Similarly to the case of LTE LAA, there should be no time gap between the CG-PUSCH and the DG-PUSCH (S1305).

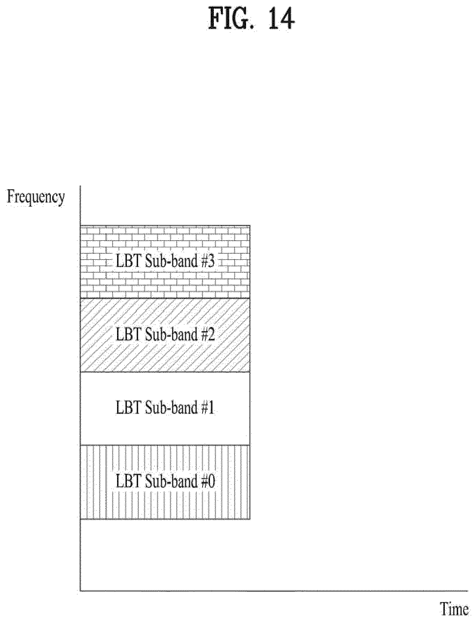

For example, referring to FIG. 14, if LBT subband #1 and LBT subband #2 are allocated as CG resources, and the DG-PUSCH is scheduled while transmitting the CG-PUSCH by performing LBT for the CG-PUSCH, LBT subband #1 and the LBT subband #2 may be allocated as the LBT subbands of the DG-PUSCH, so that the LBT subbands of the DG-PUSCH are the same as the LBT subbands of the CG resource, or LBT subband #1 or LBT subband #2 may be allocated as the LBT subband of the DG-PUSCH, so that the LBT subbands of the DG-PUSCH are a subset of the LBT subbands of the CG resource.

However, the subset relationship does not necessarily have to be satisfied in units of LBT subbands. For example, assuming that each LBT subband illustrated in FIG. 14 includes 10 RBs having indexes of #0 to #9, respectively, since the UE has performed LBT on a total of 20 RBs included in subband #1 and LBT subband #2 for CG-PUSCH transmission, the UE may transmit the DG-PUSCH without LBT even in the case in which RBs of indexes #5 to #9 of LBT subband #1 and RBs of indexes #0 to #4 of LBT subband #2 are allocated as frequency resources for the DG-PUSCH, as well as in the case in which RBs of indexes #0 to #9 of LBT subband #1 and RBs of indexes #0 to #9 of LBT subband #2 are allocated as the LBT subbands for the DG-PUSCH.

That is, frequency resources (or frequency domain) for DG-PUSCH transmission should be included in or identical to frequency resources (or frequency domain) for CG-PUSCH transmission. This inclusion relationship does not need to satisfy a subset relationship in units of LBT subbands. Even when the LBT subbands for the DG-PUSCH are configured over the two LBT subbands of CG-PUSCHs, it may be said that the frequency resources of the DG-PUSCH are included in the frequency resources of the CG-PUSCH. In other words, frequency resources for DG-PUSCH transmission needs to have a subset relationship with respect to all frequency resources for CG-PUSCH transmission.

In other words, the UE may continuously transmit the DG-PUSCH without LBT immediately after the CG-PUSCH, when there is no gap between the ending symbol of the CG-PUSCH and the starting symbol of the DG-PUSCH on the time axis, and the LBT subband resources of the CG-PUSCH which has been transmitted on the frequency axis and the DG-PUSCH which is scheduled for the UE are the same or the LBT subbands/LBT frequency resources of the DG-PUSCH are included in the LBT subbands/LBT frequency resources of the CG-PUSCH.

However, if there is a gap between the ending symbol of the CG-PUSCH and the starting symbol of the DG-PUSCH on the time axis, or if the LBT subband resources of the CG-PUSCH which has been transmitted on the frequency axis and the LBT subband resources of the DG-PUSCH which is scheduled are different, i.e., if the LBT subbands of the DG-PUSCH are not included in the LBT subbands of the CG-PUSCH, the UE may not transmit the DG-PUSCH without LBT.

In this case, the UE should drop specific X symbols, Y CG-PUSCHs or Z slots immediately before the DG-PUSCH in order to secure an LBT gap before the DG-PUSCH is transmitted. The X, Y, or Z value for how many symbols, how many CG-PUSCHs, or how many slots will be dropped to secure the LBT gap may use a value specified in the standard. Alternatively, the X, Y, or Z value may be configured for/indicated to the UE by the BS through higher-layer signaling, physical layer signaling, or a combination of higher-layer signaling and physical layer signaling, and the UE may drop the symbols, the CG-PUSCHs, or slots using the configured/indicated value.

Additionally, the same method may be applied even when the order of the CG-PUSCH and the DG-PUSCH is reversed, i.e., in the case of DG-CG back-to-back transmission. In other words, if there is no time gap between the DG-PUSCH and the CG-PUSCH on a CG resource continuously configured immediately after the DG-PUSCH, and if the CG-PUSCH and the DG-PUSCH are transmitted through the same LBT subband or the LBT subbands of the CG-PUSCH are a subset of the subbands of the DG-PUSCH, the UE may continuously transmit the CG-PUSCH without LBT immediately after DG-PUSCH transmission ends. However, since DG-PUSCH has higher priority than the CG-PUSCH, if there is a time gap between the DG-PUSCH and the CG-PUSCH or if the LBT subbands of the DG-PUSCH and the LBT subbands of the CG-PUSCH are different, the UE may skip CG-PUSCH transmission without dropping the specific X symbols or Y DG-PUSCHs of the DG-PUSCH as in (2).

[Proposed Method #5] Method of always transmitting a virtual PHR or indicating whether a PHR included in a CG-PUSCH is a virtual PHR or an actual PHR through CG-UCI, when the UE transmits a PHR for each CC in the CG-PUSCH transmitted in an NR-U cell in a situation in which a plurality of L-cells or a plurality of U- cells such as NR-U cells are configured for the UE

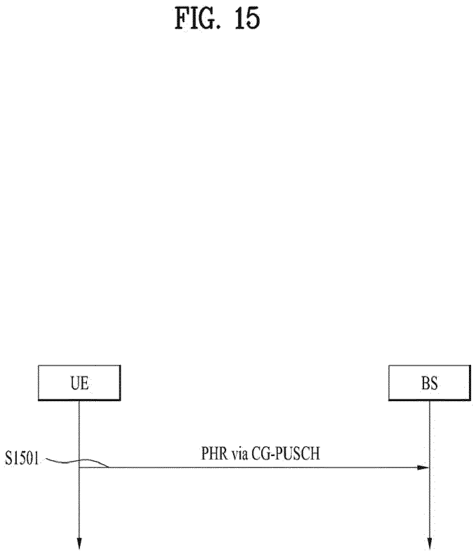

Referring to FIG. 15, in NR, the BS may simultaneously receive PHRs for total CCs/cells through a DG-PUSCH or a CG-PUSCH transmitted in one CC/cell with respect to a plurality of CCs/cells configured for the UE (S1501). In this case, each CC/cell may be a U-cell operating in a U-band, a cell operating in an L-band, or a CC/cell in which SUL is additionally configured.

There are two types of PHR information that may be included in the DG-PUSCH or the CG-PUSCH: an actual PHR based on the power of a PUSCH used by the UE for actual transmission and a virtual PHR based on a reference format defined in Clause 7.7 of 3GPP TS 38.213.

Since the CG-PUSCH or DG-PUSCH transmission in a licensed carrier is always guaranteed, there is no possibility of the BS generating confusion as to whether a PHR included in the PUSCH is the actual PHR or the virtual PHR. However, the CG-PUSCH transmitted in an unlicensed carrier may be transmitted or dropped depending on whether UL LBT is successful. In this case, if the CG-PUSCH of the NR-U cell including a PHR report is not transmitted due to failure of LBT, even when the CG-PUSCH including the PHR is retransmitted through the next CG resource, the BS may generate confusion as to whether the PHR included in the CG-PUSCH is the actual PHR or the virtual PHR because it is not possible for the BS to distinguish whether the CG-PUSCH is initially transmitted or retransmitted.

To solve this problem, when the UE transmits a PHR for each CC in the CG-PUSCH transmitted in the NR-U cell in a situation in which a plurality of L-cells or a plurality of U-cells such as NR-U cells is configured for the UE, the UE may always transmit the virtual PHR or may inform the BS of whether the PHR included in the CG-PUSCH is the virtual PHR or the actual PHR through a bitmap for each CC/cell in the CG-UCI. For example, when the number of CCs/cells configured for the UE is 8, the CG-UCI may include an 8-bit bitmap. When a bit value is '0' (or '1'), this may indicate that a PHR for a corresponding CC/cell is the actual PHR and, when the bit value is '1' (or '0'), this may indicate that the PHR for the corresponding CC/cell is the virtual PHR. The size of the bitmap included in the CG-UCI may be changed or fixed according to the number of CCs/cells configured for the UE. If the number of CCs/cells smaller than the size of the bitmap is configured for the UE in a situation in which the size of the bitmap is fixed, the remaining bits may be zero-padded. For example, if the size of the bitmap is 8 bits and the number of CCs/cells configured for the UE is 4, the UE may inform the BS of PHR information of each CC/cell through the first 4 bits, and the remaining 4 bits may be zero-padded. If the number of CCs/cells greater than the size of the bitmap is configured for the UE, the BS may acquire PHR information through a modulo operation. For example, if the size of the bitmap is 8 bits and 10 CCs/cells #0 to #9 are configured for the UE, the first bit of the bitmap may represent whether PHRs for CC/cell #0 and CC/cell #8 are virtual PHRs or actual PHRs.

Additionally, for a cell in which SUL is configured, the UE may simultaneously transmit not only a PHR for an SUL carrier but also a PHR for a normal uplink (NUL) carrier. In this case, the UE may configure and transmit a PHR report for the two carriers as a virtual PHR and a Type 1 PHR.

In addition, when the UE simultaneously transmits the PHR for the NUL carrier as well as the PHR for the SUL carrier for the cell in which the SUL is configured, the UE may configure and transmit a PHR report for the two carriers as virtual PHRs, and configure and transmit a PHR report for a carrier in which a PUSCH is configured as a Type 1 PHR and a PHR report for a carrier in which the PUSCH and/or a PUCCH is not configured or a carrier in which the PUSCH and/or the PUCCH is not configured but SRS switching is configured as a Type 3 PHR

[Proposed Method #6] Method of (1) configuring and transmitting a PHR only for a carrier in which the PUSCH/PUCCH is configured among an SUL carrier and an NUL carrier, (2) transmitting information about a PHR for a previously defined/configured/indicated carrier, or (3) indicating information about a carrier corresponding to a PHR included in the CG-PUSCH through CG-UCI or a MAC CE, when a plurality of L-cells or a plurality of U-cells such as NR-U cells is configured for the UE, both the SUL carrier and the NUL carrier are configured in a specific cell, and PUSCH or PUCCH transmission may be configured in each carrier.

A carrier for which the PHR is reported may be a carrier in which the PUCCH or the PUSCH is configured among the SUL carrier and the NUL carrier. The PHR type may be fixed to a specific PHR type (e.g., Type 1) or may be configured for/indicated to the UE to use a specific one of Type 1 and Type 3. In addition, the UE may be configured/indicated to always transmit the PHR as the virtual PHR or to transmit one of the virtual PHR and the actual PHR

A plurality of L-cells or U-cells may be configured for the UE. In addition, both the NUL carrier and the SUL carrier may be configured in a specific cell, and PUSCH or PUCCH transmission may be configured in at least one of the two carriers. In this case, a PHR report of all cells/CCs configured for the UE may be transmitted through the CG-PUSCH transmitted in the U-cells. If PUSCH or PUCCH transmission is configured only in one of the NUL carrier and the SUL carrier, the UE may transmit only a PHR for the carrier in which PUSCH or PUCCH transmission is configured.

Alternatively, even if PUSCH transmission is configured for both the SUL carrier and the NUL carrier, only a PHR for a previously configured/indicated/defined carrier may be transmitted. Alternatively, only a PHR for a specific carrier among the two carriers for which PUSCH or PUCCH transmission is configured may be transmitted, and the BS may be informed of information about a carrier corresponding to the transmitted PHR through the CG-UCI or the MAC CE which is transmitted together with the PHR

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

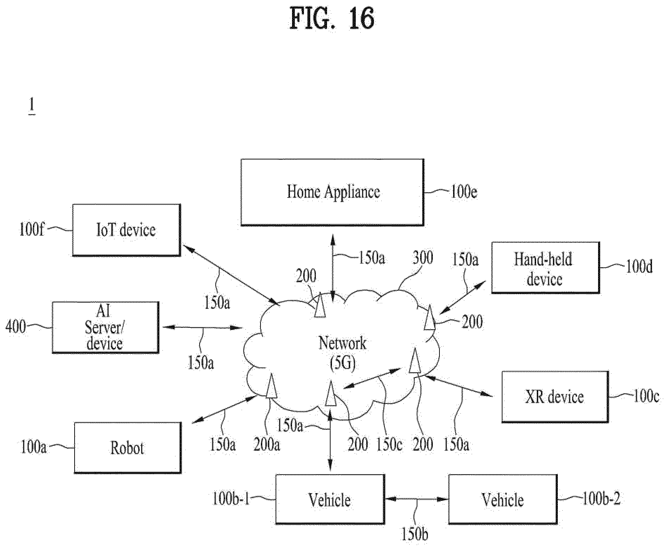

FIG. 16 illustrates a communication system 1 applied to the present disclosure.

Referring to FIG. 16, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

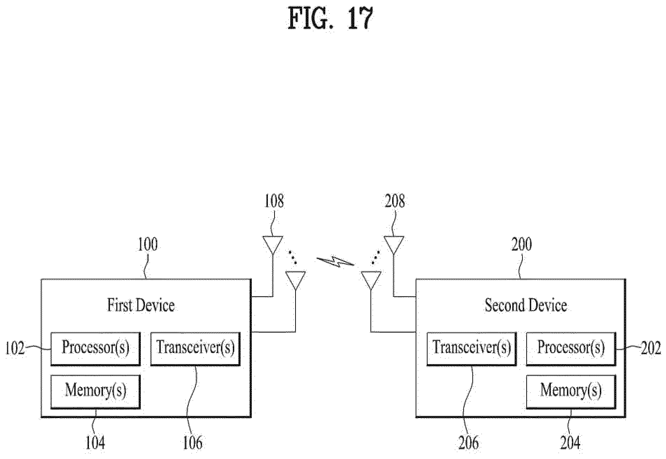

FIG. 17 illustrates wireless devices applicable to the present disclosure.

Referring to FIG. 17, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

Specifically, the processor 102 according to an embodiment of the present disclosure may control the UE to continuously transmit a DG-PUSCH after transmitting a CG-PUSCH without LBT, when the DG-PUSCH is continuously scheduled without a gap with a time axis resource for a CG configured for the UE and when LBT subbands of the DG-PUSCH are equal to LBT subbands of the CG-PUSCH or are a subset of the LBT subbands of the CG-PUSCH, while the UE is transmitting the CG-PUSCH based on Cat-4 LBT in NR-U.

The processor 102 may control the UE to drop specific X symbols, Y CG-PUSCHs, or Z slots, immediately prior to the DG-PUSCH in order to secure an LBT gap before transmitting the DG-PUSCH, when there is a gap between the ending symbol of the CG-PUSCH and the starting symbol of the DG-PUSCH on the time axis or LBT subband resources of the CG-PUSCH which has been transmitted on the frequency axis and the LBT subband resources of the CG-PUSCH which is scheduled are different, i.e., the LBT subbands of the DG-PUSCH are not included in the LBT subbands of the CG-PUSCH.

The processor 102 may control the UE to select one of a second ED threshold calculated based on a maximum UL power configured by the BS and a first ED threshold configured by the BS for UL-to-DL COT sharing, according to whether to allow DL transmission other than PDCCH transmission up to 2 symbols within a COT shared with the BS, and perform UL LBT and UL transmission based on the selected ED threshold.

In this case, the processor 102 may control the UE to inform the BS of whether DL transmission other than PDCCH transmission up to 2 symbols is permitted within a COT shared with the BS during COT sharing by transmitting, in CG-UCI, information as to which ED threshold (or UL power based on the selected threshold) of the first ED threshold and the second ED threshold has been used to perform LBT and UL transmission.

As another embodiment, the processor 202 according to an embodiment of the present disclosure may control to receive the CG-PUSCH transmitted based on Cat-4 LBT from the UE in NR-U, continuously schedule the DG-PUSCH without a gap with a time axis resource for a CG configured for the UE, and configure LBT subbands of the DG-PUSCH which are equal to LBT subbands of the CG-PUSCH or are a subset of the LBT subbands of the CG-PUSCH. In this case, the processor 202 may control to continuously receive the DG-PUSCH after the UE transmits the CG-PUSCH without LBT.

The processor 202 may configure the CG-PUSCH and the DG-PUSCH such that there is a gap between the ending symbol of the CG-PUSCH and the starting symbol of the DG-PUSCH on the time axis or LBT subband resources of the CG-PUSCH which has been transmitted on the frequency axis and LBT subband resources of the CG-PUSCH which is scheduled are different. In this case, in order for the UE to secure an LBT gap before transmitting the DG-PUSCH, the processor 202 may control to receive the CG-PUSCH except for specific X symbols, Y CG-PUSCHs, or Z slots, immediately prior to the DG-PUSCH.

The processor 202 may control to configure, for the UE, the first ED threshold used for COT sharing and the maximum UL power needed to calculate the second ED threshold used for the case in which a COT is not shared. The processor 202 may control to receive UL transmission, when the UE selects one of the second ED threshold calculated based on the maximum UL power configured by the BS and the first ED threshold configured by the BS for UL-to-DL COT sharing, according to whether to allow DL transmission other than PDCCH transmission up to 2 symbols within a COT shared with the BS and performs UL LBT and UL transmission based on the selected ED threshold.

The processor 202 may control to receive, through the CG-UCI, information as to which ED threshold (or UL power based on the selected threshold) of the first ED threshold and the second ED threshold has been used to perform LBT and UL transmission. The processor 202 may recognize whether DL transmission other than PDCCH transmission up to 2 symbols is permitted within a COT shared with the UE based on the CG-UCI.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

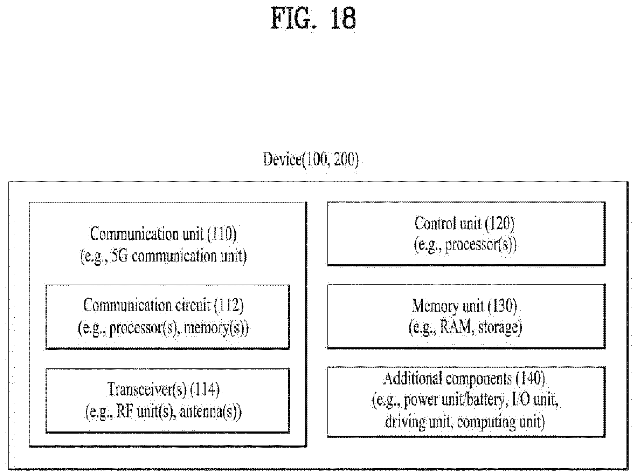

FIG. 18 illustrates another example of a wireless device applied to the present disclosure. The wireless device may be implemented in various forms according to a use case/service (refer to FIG. 18).

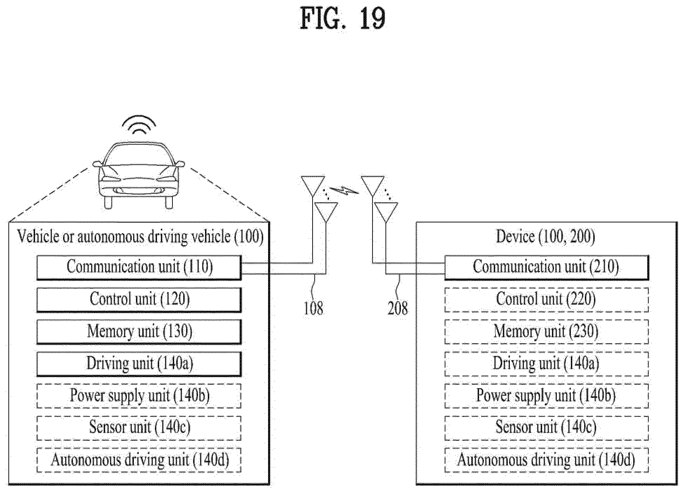

Referring to FIG. 18, wireless devices 100 and 200 may correspond to the wireless devices 100 and 200 of FIG. 18 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcasting terminal, a hologram device, a public safety device, an MTC device, a medical device, a FinTech device (or a finance device), a security device, a climate/environment device, the AI server/device (400 of FIG. 16), the BSs (200 of FIG. 16), a network node, or the like. The wireless device may be mobile or fixed according to a use case/service.

In FIG. 18, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Industrial Applicability**

While the above-described method of transmitting and receiving a UL channel in a wireless communication system and the apparatus therefor have been described based on an example applied to a 5G NR system, the method and apparatus are applicable to various wireless communication systems in addition to the 5G NR system.

**Claims**

1. A method of transmitting a physical uplink shared channel (PUSCH) by a user equipment (UE) in a wireless communication system, the method comprising:

     receiving an uplink grant for scheduling a dynamic grant (DG)-PUSCH;
     transmitting a configured grant (CG)-PUSCH; and
     transmitting the DG-PUSCH based on the UL grant,
     wherein the DG-PUSCH is transmitted without a gap after the CG-PUSCH is transmitted, based on first frequency resources for the DG-PUSCH being equal to second frequency resources for the CG-PUSCH or the first frequency resources being a subset of the second frequency resources.

2. The method of claim 1,

     wherein the transmitting the CG-PUSCH includes
     performing a listen-before-talk (LBT) operation for transmitting the CG-PUSCH, and transmitting the CG-PUSCH based on a result of performing the LBT operation, and wherein the transmitting the DG-PUSCH includes transmitting the DG-PUSCH without performing the LBT operation.

3. The method of claim 1, wherein a starting symbol of the DG-PUSCH and an ending symbol of the CG-PUSCH are continuous on a time axis.

4. The method of claim 1, wherein at least one last symbol among symbols of the CG-PUSCH prior to the DG-PUSCH is dropped, based on first frequency resources being not equal to the second frequency resources and the first frequency resources being not a subset of the second frequency resources.

5. The method of claim 1, wherein the transmission of the DG-PUSCH is scheduled after the transmission of the CG-PUSCH.

6. An apparatus for transmitting a physical uplink shared channel (PUSCH) in a wireless communication system, the apparatus comprising:

   at least one processor; and
   at least one computer memory operably connectable to the at least one processor and storing instructions that, when executed, cause the at least one processor to perform operations comprising:

   receiving an uplink grant for scheduling a dynamic grant (DG)-PUSCH;
   transmitting a configured grant (CG)-PUSCH; and
   transmitting the DG-PUSCH based on the UL grant, and
   wherein the DG-PUSCH is transmitted without a gap after the CG-PUSCH is transmitted, based on first frequency resources for the DG-PUSCH being equal to second frequency resources for the CG-PUSCH or the first frequency resources being a subset of the second frequency resources.

7. The apparatus of claim 6,

   wherein the transmitting the CG-PUSCH includes
   performing a listen-before-talk (LBT) operation for transmitting the CG-PUSCH, and transmitting the CG-PUSCH based on a result of performing the LBT operation, and wherein the transmitting the DG-PUSCH includes transmitting the DG-PUSCH without performing the LBT operation.

8. The apparatus of claim 6, wherein a starting symbol of the DG-PUSCH and an ending symbol of the CG-PUSCH are continuous on a time axis.

9. The apparatus of claim 6, wherein at least one last symbol among symbols of the CG-PUSCH prior to the DG-PUSCH is dropped, based on first frequency resources being not equal to the second frequency resources and the first frequency resources being not a subset of the second frequency resources.

10. The apparatus of claim 6, wherein the transmission of the DG-PUSCH is scheduled after the transmission of the CG-PUSCH.

11. A computer readable storage medium storing at least one computer program comprising instructions that, when executed by at least one processor, cause the at least one processor to perform operations, the operations comprising:

   receiving an uplink grant for scheduling a dynamic grant (DG)-PUSCH;
   transmitting a configured grant (CG)-PUSCH; and
   transmitting the DG-PUSCH based on the UL grant,
   wherein the DG-PUSCH is transmitted without a gap after the CG-PUSCH is transmitted, based on first frequency resources for the DG-PUSCH being equal to second frequency resources for the CG-PUSCH or the first frequency resources being a subset of the second frequency resources.

12. A user equipment (UE) for transmitting a physical uplink shared channel (PUSCH) in a wireless communication system, the UE comprising:

   at least one transceiver;
   at least one processor; and
   at least one computer memory operably connectable to the at least one processor and storing instructions that, when executed, cause the at least one processor to perform operations comprising:

   receiving, through the at least one transceiver, an uplink grant for scheduling a dynamic grant (DG)-PUSCH;
   transmitting, through the at least one transceiver, a configured grant (CG)-PUSCH; and

transmitting, through the at least one transceiver, the DG-PUSCH based on the UL grant, and
wherein the DG-PUSCH is transmitted without a gap after the CG-PUSCH is transmitted, based on first
frequency resources for the DG-PUSCH being equal to second frequency resources for the CG-PUSCH
or the first frequency resources being a subset of the second frequency resources.

13. A method of receiving a physical uplink shared channel (PUSCH) by a base station (BS) in a wireless communication system, the method comprising:

transmitting an uplink grant for scheduling a dynamic grant (DG)-PUSCH;
receiving a configured grant (CG)-PUSCH; and
receiving the DG-PUSCH based on the UL grant,
wherein the DG-PUSCH is received without a gap after the CG-PUSCH is transmitted, based on first frequency
resources for the DG-PUSCH being equal to second frequency resources for the CG-PUSCH or the first frequency resources being a subset of the second frequency resources.

14. A base station (BS) for receiving a physical uplink shared channel (PUSCH) in a wireless communication system,
the BS comprising:

at least one transceiver;
at least one processor; and
at least one computer memory operably connectable to the at least one processor and storing instructions that,
when executed, cause the at least one processor to perform operations comprising:

transmitting, through the at least one transceiver, an uplink grant for scheduling a dynamic grant
(DG)-PUSCH;
receiving, through the at least one transceiver, a configured grant (CG)-PUSCH; and
receiving, through the at least one transceiver, the DG-PUSCH based on the UL grant, and
wherein the DG-PUSCH is received without a gap after the CG-PUSCH is transmitted, based on first
frequency resources for the DG-PUSCH being equal to second frequency resources for the CG-PUSCH
or the first frequency resources being a subset of the second frequency resources.

# FIG. 1

INITIAL CELL SEARCH — PSS/SSS & [DLRS] & PBCH — S11

SYSTEM INFORMATION RECEPTION — PDCCH/ PDSCH (BCCH) — S12

RANDOM ACCESS PROCEDURE — PRACH (S13) — PDCCH/ PDSCH (S14) — PRACH (S15) — PDCCH/ PDSCH (S16)

GENERAL DL/UL Tx/Rx — S18 — PDCCH/ PDSCH — PUSCH/ PUCCH — S17
- DL/UL ACK/NACK
- UE CQI/PMI/RI RANK REPORT USING PUSCH AND PUCCH

EP 4 057 763 A1

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz

| Slot (14 symbols) |
|---|

1ms

30KHz

| Slot 0 (14 symbols) | Slot 1 |
|---|---|

500us

60KHz

| Slot 0 (14 symbols) | Slot 1 | Slot 2 | Slot 3 |
|---|---|---|---|

250us

120KHz

| Slot 0 (14 symbols) | Slot 1 | Slot 2 | Slot 3 | Slot 4 | Slot 5 | Slot 6 | Slot 7 |
|---|---|---|---|---|---|---|---|

125us

# FIG. 3

# FIG. 4

# FIG. 5

(a) Uplink Tx procedure based on dynamic grant

(b) Uplink Tx procedure based on configured grant

# FIG. 6

(a) Option 1

(b) Option 2

Initial transmission

Following repetition

EP 4 057 763 A1

# FIG. 7

(a) Carrier aggregation between L-band and U-band

(b) Standalone U-band(s)

# FIG. 8

Occupied    Unoccupied

Channel Occupancy Time          Channel Occupancy Time

Extended CCA

CCA

# FIG. 9

# FIG. 10

UE        BS

Information related to
ED level for COT sharing     S1001

CG-PUSCH + CG-UCI (information
related to ED level used in LBT)

S1003

DL transmission with/without COT sharing,
based on the ED level of CG-UCI     S1005

40

# FIG. 11

## FIG. 12

| UE | | BS |
| --- | --- | --- |

Information related to
ED level for COT sharing — S1201

DL transmission in a COT — S1203

UL transmission in the COT (LBT is performed
based on ED level related to DL-to-UL COT sharing)
S1205

# FIG. 13

UE            BS

UL grant for DG PUSCH        S1301

On-going CG-PUSCH transmission,
based on Cat-4 LBT

S1303

DG PUSCH with/without a gap after the on-going
PUSCH transmission, based on a condition, e.g., frequency
resources of the CG-PUSCH and DG-PUSCH

S1305

# FIG. 14

Frequency

LBT Sub-band #3

LBT Sub-band #2

LBT Sub-band #1

LBT Sub-band #0

Time

# FIG. 15

```
  ┌────────┐                                              ┌────────┐
  │   UE   │                                              │   BS   │
  └───┬────┘                                              └───┬────┘
      │                                                       │
      │              PHR via CG-PUSCH                         │
S1501 ├──────────────────────────────────────────────────────►
      │                                                       │
      ▼                                                       ▼
```

# FIG. 16

<u>1</u>

# FIG. 17

# FIG. 18

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

**EP 4 057 763 A1**

## INTERNATIONAL SEARCH REPORT

| | International application No. |
|---|---|
| | **PCT/KR2020/015503** |

---

**A.  CLASSIFICATION OF SUBJECT MATTER**

**H04W 74/08**(2009.01)i; **H04W 74/00**(2009.01)i; **H04W 72/12**(2009.01)i

According to International Patent Classification (IPC) or to both national classification and IPC

**B.  FIELDS SEARCHED**

Minimum documentation searched (classification system followed by classification symbols)

H04W 74/08(2009.01); H04L 27/00(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CG(Configured Grant), DG(Dynamic Grant), PUSCH(Physical Uplink Shared Channel), 동일(same), 서브셋(sub-set), 갭(gap), 자원(resource), LBT(Listen-Before-Talk), back-to-back

**C.  DOCUMENTS CONSIDERED TO BE RELEVANT**

| Category* | Citation of document, with indication, where appropriate, of the relevant passages | Relevant to claim No. |
|---|---|---|
| A | VIVO. PUSCH enhancements for URLLC. R1-1910223, 3GPP TSG RAN WG1 #98bis. Chongqing, China. 04 October 2019.<br>See sections 1 and 2.3. | 1-14 |
| A | INTEL CORPORATION. On slot aggregation for URLLC. R1-1806523, 3GPP TSG RAN WG1 Meeting #93. Busan, Korea. 12 May 2018.<br>See section 3.1. | 1-14 |
| A | LG ELECTRONICS. Discussion on configured grant for NR-U. R1-1910822, 3GPP TSG RAN WG1 Meeting #98bis. Chongqing, China. 08 October 2019.<br>See section 2.2. | 1-14 |
| A | QUALCOMM INCORPORATED. Channel access procedures for NR unlicensed. R1-1911097, 3GPP TSG RAN WG1 Meeting #98bis. Chongqing, CN. 05 October 2019.<br>See section 2.1. | 1-14 |
| A | WO 2019-030237 A1 (TELEFONAKTIEBOLAGET LM ERICSSON (PUBL)) 14 February 2019 (2019-02-14)<br>See page 10, line 20 - page 14, line 19. | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 February 2021** | **18 February 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2020/015503** |

| Patent document cited in search report | | | Publication date (day/month/year) | Patent family member(s) | | | Publication date (day/month/year) |
| --- | --- | --- | --- | --- | --- | --- | --- |
| WO | 2019-030237 | A1 | 14 February 2019 | AU | 2018-315141 | A1 | 14 February 2019 |
| | | | | CN | 111247761 | A | 05 June 2020 |
| | | | | EP | 3665825 | A1 | 17 June 2020 |
| | | | | JP | 2020-529794 | A | 08 October 2020 |
| | | | | US | 2020-0383132 | A1 | 03 December 2020 |

Form PCT/ISA/210 (patent family annex) (July 2019)